# EUROPEAN PATENT SPECIFICATION

(11) **EP 4 530 165 B1**
(45) Date of publication and mention of the grant of the patent: **08.07.2026**
(21) Application number: 23200815.1
(22) Date of filing: 29.09.2023
(51) Int. Cl.: B66C 9/00, B66C 17/00, B62D 55/075, B62D 55/265

(54) **CRAWLER TYPE VEHICLE SUSPENDED IN AND ELECTRICALLY CONNECTED TO A STRUCTURE**
RAUPENFAHRZEUG, DAS IN EINER STRUKTUR AUFGEHÄNGT UND ELEKTRISCH VERBUNDEN IST
VÉHICULE À CHENILLES SUSPENDU DANS UNE STRUCTURE ET ÉLECTRIQUEMENT RELIÉ À CELLE-CI

(43) Date of publication of application: 02.04.2025
(73) Proprietor: Ceilix AG, 82049 Pullach i. Isartal (DE)
(72) Inventor: Siedel, Michael Torsten, 53902 Bad Münstereifel (DE)
(74) Representative: Jostarndt Patentanwalts-AG

(56) References cited:
- CN-B- 110 228 541
- DE-U1- 202020 100 256
- JP-A- S59 227 570
- US-A1- 2018 050 747

## Description

The present invention relates to crawler type vehicles, especially ceiling vehicles, configured for traveling in a suspended manner, e.g., headlong at a ceiling structure. Further, the present invention refers to a method for suspending (especially hanging) and optionally also actively driving such a crawler type vehicle. In particular, the present invention refers to devices and methods according to features of the enclosed independent claims.

### BACKGROUND OF THE INVENTION

In prior art, for example in DE 20 2020 100256 U1, multiple design philosophies have already been established in context with provision of vehicles which shall be able to ensure a predefined traveling motion also in rough terrain or in context with unpredictable reaction forces or at high inclination or even in an overhead arrangement. The present invention focuses on those philosophies departing from the idea that the vehicle or transport medium should engage / interact in predefined manner with a predefined structure or underground, be it in an arrangement on the ground/floor (e.g. ground vehicles), be it a structure at a wall or at the ceiling (e.g. overhead cranes, wall crawling robots) e.g. in a storehouse or in machinery hall. Some ideas of provision of reliable contact between the underground structure and the vehicle have already been published in context with diagnosis and parameter measurement in nearly inaccessible areas or systems (e.g. ductwork, canal systems), including magnetic adhesion / interference. Nonetheless, there is a need for vehicles being capable of providing, by interacting with a predefined structure, both a predefined traveling motion and a high accuracy in positioning (positional accuracy) in very reliable manner, preferably irrespective of the kind of underground or wall constitution, wherein the predefined structure should preferably be provided in very flexible and varied manner to many kinds of underground or wall or ceiling contour / geometry.

The skilled person may differentiate between those vehicles which are provided for moving on the underground and those vehicles which are provided for moving along a ceiling structure, especially since the latter have to be suspended in secure manner also, in order to avoid going down. Therefore, there might be different approaches as to the kinematics ensuring interaction/engagement at the structure's interface.

### SUMMARY OF THE INVENTION

It is an object of the present invention to provide for a vehicle and driving mechanism which respectively allows for reliable and accurate traveling/driving motion and positioning of the vehicle at/on a structure, preferably not only for one-dimensional tracks, but potentially also for two-dimensional tracks of motion at least along the structure, e.g., at a ceiling structure, and establishing an electrical connection between the vehicle and the structure. In particular, the object also includes providing for a suspension mechanism resp. suspension means allowing for securely suspending the (ceiling) vehicle on the ground or at a ceiling structure and establishing the electrical connection. In particular, the object may also include provision of an appropriate coupling mechanism for reliably coupling the vehicle with the structure. Also, the object of the present invention may further include reliable hanging/suspending methods and optionally also actively driving methods for movably suspending such a vehicle on/at a structure, e.g., in suspended/hanging manner at a ceiling structure.

The present invention solves the problems associated with the prior art by providing a device comprising the features of independent claim 1. Advantageous refinements and embodiments of the device are derived from dependent claims 2-14. Furthermore, the problem is solved by a method according to claim 15. If not explicitly excluded, the teachings of the subclaims can be combined arbitrarily with the teachings of the main claims and the subclaims.

According to a first aspect of the invention, a crawler type vehicle is provided for traveling in a suspended manner, especially headlong at a (ceiling) structure, wherein the vehicle exhibits:
- a plurality of suspension elements configured for suspending the vehicle and configured for coupling the vehicle to a structure, wherein at least two of the suspension elements each comprise at least two electrically connected electrical contacts configured for establishing an electrical connection between the structure and the vehicle,

wherein the vehicle is configured for moving along the structure by decoupling a subset of the plurality of suspension elements from respectively coupling them into the structure, wherein the first electrical contact of a first suspension element for establishing an electrical connection is electrically connected to a first pole/phase/line of a bus in the structure when the vehicle is coupled to the structure via the first suspension element and the first electrical contact of a second suspension element for establishing an electrical connection is electrically connected to a second pole/phase/line of the bus in the structure when the vehicle is coupled to the structure via the second suspension element, and
wherein the second electrical contacts of the suspension elements are each connected to a respective pole/phase/line of an internal bus of the vehicle at least when the vehicle is coupled to the structure via the suspension elements for establishing an electrical connection. Such configuration also allows for moving a vehicle along a structure, optionally in context with actively driven vehicles or in context with passive units which can fulfil the function of a vehicle when activated/driven externally resp. by any further means which are not necessarily part of the vehicle, wherein an electrical connection is established between the vehicle and the structure.

According to the present disclosure, when it is referred to "structure" or "ceiling structure", likewise, a structure which may also extend on the ground or along a wall or on an inclined plane (or the like) can be designated. The present invention can preferably be applied for ceiling vehicles being arranged at resp. traveling along a ceiling structure, and in addition, the present invention also allows for any motion along any structure with alternative orientation and/or arrangement. Thus, referring to a "structure" or "ceiling structure" includes reference to any other "structure" exhibiting the features allowing for coupling with/to the inventive vehicle and de-/coupling kinematics.

According to the present disclosure, when it is referred to "vehicle" or "ceiling vehicle", the disclosure also generally refers to crawler type vehicles and its relative spatial arrangement or traveling motion (e.g., also on the ground or on an inclined plane or at the wall). According to the present disclosure, "bus" may denote any communication bus or a power supply bus, hence the term "pole/phase/line" to account for the poles of a DC power source, the phases of an AC power source, and the lines of a communication bus such as e.g., a I2C (TWI).

The crawler type vehicle can exhibit at least one motor/actuator for actively driving the crawler type vehicle along the structure.

The crawler type vehicle can follow an intended direction resp. an intended path of motion, especially in conjunction with appropriate sensor-actor-arrangements.

The characteristic, that the suspension arrangement is configured for active motion of the vehicle / the vehicles includes all embodiments wherein the vehicle/s can move on its/their own. According to the present disclosure, "actively moving" designates a motion of the vehicle in relation to the structure actuated preferably by an electric motor of the vehicle connected to a drive unit such that the vehicle can move on its own inside the structure when the motor is activated. The choice of an appropriate motor can be carried out by the person skilled in the art in regard to existing motors and motor arrangements depending on the respective application / task / size of the respective crawler type vehicle.

According to the present disclosure, "electrical contact" designates a connection mechanism that enables the flow of electrical current between two or more conductive elements. The primary objective of an electrical contact is to establish a reliable and efficient means of transferring electrical signals or power. The electrical contacts must possess certain key properties, such as high electrical conductivity, mechanical robustness, corrosion resistance, and thermal stability. Examples of suitable materials for electrical contacts may include copper, copper alloys, or noble metals like gold, silver, or platinum, as well as various alloys and composite materials. It is imperative that the connection between the electrical contact and the pole/phase/line in the structure be established in a reversible manner, allowing for repeated engagement and disengagement without compromising its performance. Examples of reversible electrical contact mechanisms include sliding contacts, where two surfaces slide against each other to establish and break the connection, or roller contacts, where rotating elements facilitate electrical contact.

According to an embodiment, a crawler type vehicle is provided having first electrical contacts of the suspension elements configured for establishing an electrical connection with the structure, wherein the first electrical contacts exhibit a first slider for slidingly connecting to power rails of a corresponding pole/phase integrated in the structure and wherein the second electrical contacts exhibit a second slider for a slidable contact with conducting rails of the corresponding pole/phase, wherein each first slider is electrically connected to its corresponding second slider of the respective suspension element. The power rails can be integrated into the profiles of the structure, i.e., along the I-, L-, or T-profiles on one edge or side, preferably above the bearing surface of the profile.

According to an embodiment, the vehicle comprises electronics connected to the internal bus for supplying the vehicle with power. These electronics can comprise but are not limited to communication modules for wireless or wired data exchange (vehicle-to-vehicle, vehicle-to-infrastructure, vehicle-to-mobile devices, etc.), a central control unit, sensors (proximity sensors, accelerometers, LiDAR, radar, etc.), a power management system (power converters (AC/DC, DC/DC), battery management, voltage regulators, ESD protection), motors, etc. In addition or alternatively, the vehicle comprises an energy storage, such as a battery pack and/or super capacitors. In addition or alternatively, the vehicle comprises connection means for connecting to equipment, wherein the equipment can be supplied with power via the connection means. The connection means can be used to connect to a hoist, a robotic arm, studio equipment or any other kind of equipment. It is possible to combine the crawler type ceiling unit with a robotic arm. The robotic arm can e.g., be connected to the crawler type ceiling unit via coupling means of the type described in EP3705410A1. The robotic arm can exhibit means for securely lifting objects. Alternatively, the robotic arm can e.g., be directly connected to a camera, lighting equipment, a welder or other tools. According to an embodiment, when the vehicle is moving, when the suspension elements for establishing an electrical connection are coupled into the structure, the second sliders are connected to the conducting rail such that the first slider has a defined potential before the first sliders are in proximity or connected to the power rail and when the suspension elements are decoupled from the structure, the first sliders are disconnected from the power rail before the second sliders are disconnected from the conducting rail. This measure serves to avoid spark creation, especially in the moment the suspension elements are brought into contact with the structure, by pulling the floating potential of the electrical contact to the potential of the power rail before. Alternatively, when the suspension elements are coupled to the structure, the first sliders are connected to the power rail before the second sliders are in proximity or connected to the conducting rail and when the suspension elements are decoupled from the structure, the second sliders are disconnected from the conducting rails before the first sliders are disconnected from the conducting rail. This configuration can be beneficial for low power applications and applications where the vehicle is particularly sensitive. It also reduces wear on the electric rails in the ceiling structure and shifts potential wear into the vehicle sliding contacts which are considered to be more simple to restore by maintenance actions.

According to the invention the vehicle exhibits
- at least one first drive unit configured for circumferential motion and accommodating a first circumferential track and a second circumferential track having a different circumferential shape/contour than the first circumferential track, wherein the suspension elements are attached to the first circumferential track at predefined first longitudinal positions corresponding to a predefined raster, wherein the suspension elements are guided along the two circumferential tracks by the circumferential motion.

According to the present disclosure, when it is referred to "circumferential track", the disclosure also generally refers to closed loop guidings and lines and predefined contours along which the suspension elements are guided and/or driven.

According to the present disclosure, when it is referred to "profiles" or "T-profiles", the disclosure also generally refers to different kinds of profiles like e.g. I-profiles or L-profiles which may provide for advantageous/favorable arrangements in individual applications. According to the present disclosure, when it is referred to "(first) drive unit" or "drive unit of a first kind", the disclosure especially refers to a unit accommodating kinematics allowing for traveling motion of the vehicle, i.e., comprising the suspension elements and means for guiding the suspension elements, especially circumferential tracks. A drive unit can e.g., comprise a housing with a first and second circumferential track engraved into the housing, wherein a chain comprising suspension elements is guided along the first and second circumferential track via pulleys.

The suspension elements can, e.g., be coupled with the ceiling structure based on form fit (form closure, positive locking), especially exclusively form fit (no force-fit coupling). According to the invention, it has been found that form fit can advantageously be provided by wheels or any other bearing points at a free end of the respective suspension element for being in contact with T-profiles or other kinds of profile rails of the ceiling structure (e.g., C-profiles or L-profiles or I-profiles). It has been found that form fit provides for a preferred/superior manner of coupling in many circumstances, especially in comparison with magnet coupling or the like. Depending on the kind of drive unit or vehicle or spatial orientation of the structure, the skilled person can decide which kind of profile (e.g., T-profile) is most appropriate.

Also, depending on the orientation of the structure, the drive unit's traveling motion (as to its spatial direction resp. locomotion) can be individual. The skilled person may implement the present invention for different kinds of spatial traveling motions, especially without any limitation, i.e., in 2D or even 3D degrees of freedom.

Also, the shape/contour of respective circumferential tracks can be individual, i.e., the skilled person can decide, e.g., about a certain degree (radius) of curvature in specific sections of the respective circumferential track. For example, each track exhibits at least three different guide/rail sections, namely: a first (linear) section in which each suspension element is engaged with the profile, wherein the suspension element performs a linear motion; and at least one second (curved) section in which each suspension element performs a de-/coupling motion (wherein each track may exhibit two second sections being arranged oppositely); and a third (linear) section in which the suspension elements are returned to couple again with the profile (for continuous, circumferential motion and engagement process). Thereby, first and second tracks may define the trajectory of the respective free ends of the suspension elements (especially exhibiting at least one roller being attached to the respective suspension element) by any appropriate means (e.g. by a gliding/rolling contour, a chain drive, a timing belt, or any likewise mechanism or mechanical feature) which is configured for predefining a specific contour and for guiding the free ends resp. the rollers to follow that contour of the tracks.

Generally speaking, the vehicle is configured for moving along the ceiling structure in at least one spatial direction by decoupling a subset of the plurality of suspension elements from resp. coupling them into the structure, especially when said subset of suspension elements are guided along a curved section of the circumferential tracks. It should be noted that according to the invention, the term "spatial direction" designates a direction in space, thus, the term "spatial direction" may comprise a motion along a space axis in both directions along the space axis. Thus, the term "in at least one spatial direction" designates a one-dimensional motion (which is optionally bidirectional, i.e., back and forth) having one degree of freedom (especially linear motion). Consequently, a/the term "two-dimensional motion" refers to a motion having two degrees of freedom (especially linear motion in a first spatial direction and in a second spatial direction, the second spatial direction e.g., being orthogonal to the first spatial direction, optionally also in bidirectional manner).

It should be noted that according to the invention, the term "drive unit" especially may designate the whole assembly of drive components and kinematic components required for realizing the desired traveling motion. But the drive unit does not necessarily include any active motor or drive. Also, the drive unit may further comprise a case or chassis accommodating structural parts and elements for arrangement of any parts of the drive section. Further, the drive unit may also comprise structural parts or supports or beams for mounting and support of any hoist component or passenger/cargo transport components.

The shape or dimension of the at least one drive unit (and also of the circumferential tracks) can be defined individually according to specific applications. E.g., the cross-section geometry of the at least one drive unit is in the shape of a racecourse (parallel longitudinal sections and opposite semicircle sections). Alternatively, the cross-section geometry can also be circular or elliptical for example.

The vehicle may (optionally) comprise different kinds of power units, drives, motors and actuators, not only for the drive units, but also for further functions as e.g., winch or hoist functions. Generally, the vehicle can be provided as a passive vehicle without any motor for driving the vehicle (then, the vehicle can be positioned e.g., via external forces which apply on a hoist mechanism or the like) or as an active vehicle exhibiting at least one motor interacting with the driving mechanism resp. with the suspension elements. In particular, the vehicle exhibits at least one power unit or motor for each resp. for the at least one drive unit, e.g., an electric motor which is coupled to an axis of rotation of a gear unit interacting with the respective circumferential track. Also, the vehicle may optionally exhibit at least one motor interacting with a/the wheels of the suspension elements, in order to allow for motorized motion in a further spatial direction; thus, the wheels can be driven by any drive to actively drive along the profile rails. In particular, the vehicle may also exhibit at least one hoist (hoist unit) and a traction mechanism configured for lifting loads. E.g., the hoist unit can be fixed to and supported by the at least one drive unit.

Each power unit, drive, motor and/or actuator of the vehicle can be coupled to a control unit of the vehicle. In particular, the control unit may control the type/kind of motion, and the control unit may also control e.g., a lifting action of a hoist unit e.g., in context with cargo tasks or logistic tasks in general. The vehicle may exhibit two or three drive units which can be arranged in predefined lateral distance to each other (e.g. defined/connected via cross-beams or the like), and in case the vehicle should be driven in active manner (which configuration is optional), each drive unit may exhibit at least one drive/motor for (actively) driving the suspension elements along the circumferential tracks, and these drives/motors can be controlled depending on each other, e.g. via the speed of rotation. Thus, a traveling direction can be controlled also, especially in combination with actively driven wheels of the suspension elements being driven along the profile rails of the ceiling structure (which active drive aspect is optional, too).

In other words, in the present disclosure, the term "drive unit" especially refers to a unit accommodating kinematics allowing for traveling motion of the vehicle. Thus, the term "drive unit" not necessarily implies presence of active motors; rather, the traveling motion may also be induced by external forces; thus, the term "drive unit" not necessarily implies the unit to be driven in active manner. Thus, the term "driving motion" (which designates circumferential motion along the first and second circumferential tracks) is different from the term "traveling motion" which designates a motion of the vehicle itself.

It has been found that the kinematics according to the present invention allow for equipping the vehicle with at least one drive unit, i.e., there is no need of providing more than one drive unit; preferably, two or even three drive units (especially in view of improved form-fit) allow for even more reliable suspension.

According to a further embodiment, the vehicle exhibits:
- at least two conducting rails placed in parallel at least to sections of the circumferential tracks, wherein the at least two suspension elements for establishing an electrical connection comprise means for dis-/connecting from/to the conducting rails, when the suspension elements are de-/coupled from/into the structure. The conducting rails can be integrated into the vehicle particularly easily, when the first drive unit has a race-course shape, wherein the suspension elements that are currently coupled into the structure are following a straight or linear section. Arranging two conducting rails in parallel can mean to place them on opposite sides at the same height of the drive unit, on one side at different heights with respect to the plane in which the structure is extending, or on opposite sides at different heights. If only one first drive unit is used, it has proven beneficial to place the conducting rails on opposite sides. However, for scalability and easier integration process of more drive units, it can be beneficial to arrange two conducting rails at different heights on one side, because another drive unit, also exhibiting conducting rails in the same fashion could be integrated into the first drive unit in a mirror-inverted manner.

According to a further embodiment, the at least one drive unit comprises an even number of suspension elements. This allows easy installation and synchronization between the structure and the vehicle due to periodicity because it ensures in a very easy and reliable manner that no polarity swaps can occur on the conducting rails due to a suspension element coupling into a profile with a power rail of opposite polarity. This also facilitates scalability of the structure. In general, the at least one drive unit must comprise a number of suspension elements equal to an integer multiple of the number of poles/phases/lines of the electrical bus.

According to a further embodiment, the suspension elements configured for establishing an electrical connection with the structure are distributed along the at least one first drive unit such that when the vehicle is moving along the structure a suspension element for the electrical connection of a respective pole/phase/line is coupled into the structure before the otherwise last suspension element connected to the respective pole/phase/line is decoupled from the structure. This helps to ensure an uninterrupted connection with the respective pole/phase/line while moving the vehicle on the ceiling structure.

According to a further embodiment, the at least one drive unit of the vehicle is configured for enabling a closed loop trajectory of the suspension elements, the first and second circumferential tracks are shaped in such a manner that the suspension elements are de-/coupled from/into the structure only when passing a curved section of the tracks, the suspension elements are fixedly attached/coupled by means of a first pulley to/with the first circumferential track, wherein the suspension elements are guided within the second circumferential track by means of a second pulley respectively, wherein the first and second pulley preferably are arranged at a lever arm of the respective suspension element, wherein the respective suspension element preferably has an L-shape, and/or wherein each suspension element exhibits a first pulley and a second pulley arranged in longitudinal distance with respect to the first pulley at a lever arm of the respective suspension element, wherein the suspension element is coupled to the first and second tracks via the first and second pulleys. In addition or alternatively, each suspension element exhibits a lever arm accommodating/supporting a/the pulley guided by the second track, wherein the pulley is arranged at a free end of the lever arm, and wherein in a linear section of the track, the lever arm is pointing in the driving/traveling direction, at least roughly, wherein the suspension elements are connected to each other by means of longitudinal connecting elements, especially by longitudinal connecting elements being connected at the axis of a/the first pulley of the respective suspension element, thereby forming a closed loop of interrelated suspension elements distanced to each other in the predefined raster, the first circumferential track exhibits a chain or is provided/defined by a chain forming a closed loop of interrelated chain elements connecting the suspension elements, wherein the vehicle exhibits a plurality of counter wheels, especially configured and arranged for frontally interacting with the ceiling structure, wherein the plurality of counter wheels are preferably coupled to/with the first circumferential track, especially coupled to chain elements of the first circumferential track;
wherein the vehicle exhibits a further drive unit, preferably of the same kind as the first drive unit, accommodating further circumferential tracks, wherein a plurality of further suspension elements are attached to the further circumferential tracks in predefined longitudinal positions corresponding to a/the predefined raster and are configured for suspending the vehicle and for coupling the vehicle to the structure, especially such that the vehicle is secured with respect to opposite directions at the structure, wherein the vehicle exhibits further suspension elements which are attached to further circumferential tracks, wherein the suspension elements and the further suspension elements momentarily engaging the structure are securing/blocking the vehicle at the structure with respect to the driving/traveling direction and opposite thereto. In addition or alternatively, the vehicle exhibits a further drive unit which exhibits the same configuration as a/the first drive unit but with mirror-inverted arrangement of the further suspension elements and further circumferential tracks, wherein the further suspension elements are guided/driven in a direction opposite to the guiding direction of the suspension elements of the first drive unit, especially such that both the respective suspension elements and further suspension elements are simultaneously de-/coupling to/from the structure, the at least one first drive unit is configured for lifting the respective suspension element out of the structure in an unloaded state, especially such that the at least one first drive unit provides for both de-/coupling kinematics for a subset of momentarily unloaded suspension elements and suspension of the vehicle by a subset of momentarily loaded suspension elements at the same time. In addition or alternatively, the at least one drive unit has a substantially plane configuration. In addition or alternatively, the vehicle exhibits at least two drive units arranged in parallel to each other. In addition or alternatively, the circumferential tracks are respectively guided/driven in a plane, extending in two-dimensional manner. In addition or alternatively, the at least one first drive unit is coupled by means of at least three suspension elements. In addition or alternatively, the respective suspension element has an L-shape which provides for two arms defining the relative arrangement of a/the wheel and first and second pulleys of the respective suspension element. This configuration is favourable in view of scaling, allows for providing, along a rectilinear section of the tracks, a section in which suspension of the vehicle can be secured by scalable number of suspension elements. Further, this arrangement allows for high accuracy of the predefined path and amount of the predefined motion of a free end (or of a/the wheel) of the respective element. The lever arm pointing (roughly) in the driving/traveling direction (second spatial direction) allows for effecting a great effective length of the lever arm section between first and second pulley, thereby ensuring considerable pivot motions for de-/coupling kinematics. Also, this configuration allows for adjusting the shape/contour of the track by means of a chain tensioning device or other kinds of deviating point/pulley. In particular, the first circumferential track can be defined by a chain connecting the suspension elements. According to the present disclosure, the term "chain" may also refer to a belt or cable or any other circumferential driving element that allows to follow/constrain to the circumferential track(s). The skilled person may decide which configuration of the chain is most appropriate in/for an individual application. The plurality of counter wheels allows for securing the vehicle's position with respect to the further (second) spatial direction (normal force being exerted on the structure in case the vehicle is arranged in a headlong manner upside down or at an inclined plane). In particular, the plurality of counter wheels may/can provide for a counter force drive module (counter force unit) which allows/facilitates even more secure positioning and suspension of the vehicle, e.g., on an inclined plane or in an overhead arrangement (upside down). The free ends of the counter wheels can be configured in dependence on the type/shape of the (ceiling) structure, e.g., the free ends of the counter wheels exhibit at least one wheel or pulley. A further first drive unit accommodating further circumferential tracks configured for synchronous circumferential motion of further suspension elements facilitates scaling up and favors configurations for vehicles having high stability and security requirements. Further first drive units also provide for high security and even self-locking suspension. The closed loop of interrelated suspension elements distanced to each other in the predefined raster ensures accurate relative arrangement of the plurality of suspension elements with respect to each other. Each longitudinal connecting element preferably exhibits the shape of a rod or stick or small lever arm. In other words: The plurality of longitudinal connecting elements may provide for a closed loop of interrelated elements which form a kind of chain or the like which is guided/driven along the circumferential track(s). A further (first) drive unit with mirror-inverted arrangement advantageously fits with a ceiling structure being made of or being provided by T-profiles or T-shaped support elements (especially T-shaped ceiling beams). The provided kind of de-/coupling kinematics also provides for a quite energy-efficient and force-efficient manner of driving/traveling/advancing. Also, minimizing forces and momentum in context with the de-/coupling process also favors potentially very fast crawling motion(s) even in case the vehicle exhibits considerable weight or has to lift considerable loads. The parallel arrangement of multiple (first) drive units that have a substantially plane configuration in a lateral view (side-face) favors implementation of two or even three (first) drive units in a quite narrow/slim arrangement, respectively. The guiding/driving of circumferential tracks in a plane, extending in two-dimensional manner favors implementation of a linear traveling motion combined with a motion along the ceiling structure, orthogonal to the traveling motion of the circumferential tracks. The coupling of the vehicle by means of at least three suspension elements provides for distributing any forces and momentum via a plurality of suspension elements, thereby ensuring a good security and stability level. The L-shape of the configuration allows for a robust design; also, the suspension elements can easily be designed individually depending on specific applications and specific ceiling structures, by adapting the design of the lever arms.

According to further embodiment, the vehicle comprises four first drive units, all of which are arranged in parallel, with two of the first drive units with mirror-inverted arrangement of the further suspension elements and further circumferential tracks, wherein the further suspension elements are guided/driven in a direction opposite to the guiding direction of the suspension elements of the first drive unit, especially such that both the respective suspension elements and further suspension elements are simultaneously de-/coupling to/from the structure, wherein the first drive units are arranged pairwise, wherein the pairs are horizontally spaced apart, wherein at least one first drive unit of each pair comprises suspension elements for establishing an electrical connection to the structure. The mirror-inverted pairwise arrangement reduces slip and ensures that the vehicle retains his orientation with respect to the structure. The space between the pairs of the first drive units can be dimensioned such that all potential additional components can be fit between the pairs. Because in both pairs there is at least one drive unit with suspension elements for establishing an electrical connection to the structure, electrical signals and power can be routed inside the vehicle particularly easily.

According to an embodiment, every suspension element is configured for establishing an electrical connection with the structure. This can be beneficial for applications where a particularly high amount of power is to be transferred via the suspension elements because the current can be distributed over many suspension elements, reducing heat creation and wear of the components. Additionally, with this redundant configuration, a disconnection of single suspension elements would not result in an open loop of the electrical connection line.

According to an embodiment, the vehicle exhibits:
- at least one second drive unit configured for enabling locomotion of the ceiling vehicle in at least two spatial directions (x, y), namely a first spatial direction (x) being predefined by the structure and a second spatial direction (y) being defined by the guiding/driving motion of the at least one first drive unit, wherein the second spatial direction is orthogonal to the first spatial direction, wherein the second drive unit is configured for locomotion of the vehicle in the first spatial direction providing for at least two-dimensional locomotion capability of the vehicle, wherein the respective suspension element exhibits at least one wheel which is arranged and configured for being guided along the structure, especially on a wheel tread of a respective/corresponding profile of the structure,
- at least two individually controllable motors, wherein at least one first drive unit and at least one second drive unit is connected to at least one motor, and wherein the motor for the first drive unit(s) and the second drive units are different, providing for active two-dimensional traveling capability of the vehicle, wherein the motors are electrically connected to the energy storage and/or to the conducting rails. The first drive units of the vehicle can be scaled up in number, e.g., the vehicle exhibits three first drive units each being based on the same kinematic concept, but at least one of these drive units providing for mirror-inverted type/manner of de-/coupling kinematics. This configuration of the invention allows for advantageous realization of an omniwheel behavior of the vehicle, providing for at least two-dimensional locomotion capacities of the vehicle. The vehicle can comprise, e.g., at least one holonomic wheel being part of the second drive unit. This provides active motion in the first spatial direction defined by the structure via the second drive unit and the motor connected thereto, and passive motion in the second spatial direction. A holonomic wheel is a wheel whose wheel tread consists of rollers whose axes of rotation are at an angle to the axis of rotation of the main wheel. The absolute angle between the axes can for example be any angle between 5 and 90 degrees, especially 45 degrees. This angle has to be regarded when controlling the at least two motors, since the movement of the first drive units and the second drive unit are not independent in the case that the angle of the rollers to the wheel is different than 90 degrees. An angle smaller than 90 degrees can result in advantageous configurations regarding the traction of the holonomic wheel with the profiles of the structure.

In case the angle is smaller it is possible to place more rollers with the same diameter around the wheel, which enhances traction transmission and can compensate for gaps in the traction transmission of a single omniwheel. Preferably, the motors receive power from an internal energy storage unit, such as a battery pack and/or a super capacitor. A super capacitor can be especially beneficial for vehicles with high accelerations and short acceleration and braking times.

According to an embodiment, the vehicle exhibits two conducting rails, wherein the conducting rails are placed on opposite sides of one or more first drive units, wherein the second slider of one suspension element is placed on one side and the second slider of a second suspension element is placed on another side. Alternatively, the two conducting rails are placed on one (mutual) side of the at least one first drive unit vertically spaced apart, wherein the second slider of one suspension element is placed on one side at a corresponding first height and the second slider of a second suspension element is placed on the same side at a corresponding second height. The first variant has beneficial properties for ESD-protection because the first drive unit placed between the conducting rails prevents any material short-circuiting the two rails. The latter embodiment can be especially useful since this allows two first drive units to be arranged in a mirror-inverted manner easily. A vehicle comprising two first drive units with two conducting rails on one side each can allow the vehicle to connect, e.g., to all phases of the (domestic) power grid, to a TWI and additionally to a DC or AC supply, or to more complex communication busses.

According to an embodiment, the vehicle exhibits four conducting rails, wherein two conducting rails are each placed on opposite sides of one or more first drive units, wherein the second sliders of two suspension elements are placed on one side and the second sliders of two second suspension elements are placed on another side, and wherein the two conducting rails that are placed on one side of the at least one first drive unit are spaced vertically apart, wherein the second sliders of the suspension elements are placed on one side at a corresponding first height and the second sliders of the second suspension elements are placed on the same side at a corresponding height. This means that the internal bus of the vehicle consists of four lines, wherein the four conducting rails preferably accompany linear sections of the first drive unit(s).

According to another aspect of the invention, a method of suspending a crawler type vehicle, especially suspending a crawler type vehicle according to one of the described embodiments, at/from a structure for traveling in a suspended manner along the structure, especially headlong the structure, is provided. According to the method, the vehicle is suspended by means of a plurality of suspension elements coupling the vehicle to the structure, wherein a circumferential guiding/driving motion is defined by first and second circumferential tracks having a different circumferential shape/contour, wherein the suspension elements are attached to the first circumferential track at predefined first longitudinal positions corresponding to a raster defined by the structure, wherein the vehicle is suspended such that it can move along the structure by decoupling a subset of the plurality of suspension elements from resp. coupling them into the structure when the suspension elements are guided along the circumferential tracks by the circumferential motion, wherein the circumferential motion is transmitted/transferred by the suspension elements momentarily engaging the structure, wherein the circumferential motion is provided by first drive units, and wherein the vehicle is electrically connected to a bus integrated into the structure, wherein it is preferably ensured that at least two suspension elements are connected to at least one respective pole/phase/line of the bus at all times, preferably to each pole/phase/line of the bus. The structure can exhibit designated areas with poles/phases/lines in which the vehicle can move to recharge or to communicate and receive updates. However, it is preferred that the whole structure exhibits poles/phases/lines of at least one bus. To ensure that at least two suspension elements are connected to at least one respective pole/phase/line of the bus at all times, the vehicle and structure have to be coordinated such that there is always one suspension element of a corresponding pole/phase/line connecting to the bus in the structure by coupling the suspension element into the structure before the otherwise last suspension element that is currently connected to the same pole/phase/line in the structure gets disconnected from the bus from a decoupling process of the suspension element.

### BRIEF DESCRIPTIONS OF THE DRAWINGS

Embodiments of crawler type vehicles are described with reference to the following drawings.

The same numbers are used throughout the drawings to reference like features and components:
From the figures show
- **Fig. 1A - Fig. 1O**: a kinematic concept of a crawler type vehicle according to the invention;
- **Fig. 2A - Fig. 2C**: a detail of a (first) drive unit;
- **Fig. 3A - Fig. 3F**: details of suspension elements of a crawler type vehicle;
- **Fig. 4A - Fig. 4G**: a crawler type vehicle comprising multiple drive units;
- **Fig. 5A - Fig. 5B**: a side view of a drive unit, wherein a component is hidden;
- **Fig. 6A - Fig. 6B**: a counter unit with counter wheels;
- **Fig. 6C - Fig. 6D**: a drive unit exhibiting two kinds of suspension elements;
- **Fig. 7A - Fig. 7D**: a drive unit suspended in a structure with an electrical connection;
- **Fig. 8**: a drive unit with one set of suspension elements;
- **Fig. 9**: a drive unit with two sets of suspension elements;
- **Fig. 10**: a crawler type vehicle suspended in a structure; and
- **Fig. 11**: a crawler type vehicle from a top view.

### DETAILED DESCRIPTION OF THE DRAWINGS

The present invention provides for a vehicle 10, especially a ceiling vehicle 10, e.g., having a first drive unit 11 (crawler track-like), especially a first drive unit 11a and a further first drive unit 11b and optionally also a further first drive unit 11c. The vehicle 10 is configured for traveling along a (ceiling) structure 1 exhibiting a predefined raster 1a which is, e.g., defined by T-profiles resp. T-rails 1.1 or any such profile rails. The profiles 1.1 exhibit at least one wheel tread 1.2, and an electrical bus 1.3 providing for electric signals or energy is arranged at the profiles. The vehicle 10 is coupled to the structure 1 and suspended via a plurality of suspension elements 13 (e.g., each including at least one chain element), wherein at least a subset of the suspension elements 13c, 13d each exhibit two electrical contacts 13.4, 13.7 respectively, wherein a first electrical contact 13.4 is configured to connect to the electrical bus 1.3, and a second electrical contact 13.7 connected to the first electrical contact 13.4 is electrically connected to an internal bus of the vehicle 10. A crawler type vehicle arrangement 100 is composed of at least one (ceiling) vehicle 10 and at least one (ceiling) structure 1.

The at least one drive unit 11 provides for a drive mechanism 11.1 with at least one motor 11.5 or actuator, which allows for circumferential motion of the suspension elements 13 along circumferential tracks 12, namely simultaneously along a first and a second circumferential track 12a, 12b, which tracks exhibit individual shapes/contours XZa, XZb. Preferably, the tracks only extend two-dimensionally (2D), i.e., in a plane, and the shape is different at least in curved sections of the tracks. Each track 12a, 12b exhibits a parallel/linear section 12p (resp. two parallel sections) and a redirection/curved section 12r (resp. two curved sections). A lateral area resp. surface shell 11.2 of the at least one drive unit is preferably flat, plane, even, respectively on each lateral side. Such a configuration is also favorable in view of interconnection of several drive units.

The vehicle 10 exhibits at least one further first drive unit 11b exhibiting first and second circumferential tracks 12a, 12b and accommodating a plurality of further suspension elements 13b which are arranged mirror-inverted, with respect to the suspension elements 13 of the first drive unit 11a. The drive units 11a, 11b provide for a traveling motion (e.g., by a synchronous guiding/driving motion of/to the suspension elements), and these drive units 11a, 11b can be interconnected, e.g., via cross-beams or the like. Also, the first and second drive units 11a, 11b may provide for different driving motions, e.g., in order to force a nonlinear, but curved/curvilinear traveling motion. The desired/required traveling motion can be controlled via a control unit 30 coupled to at least one motor 11.5 or actuator. In particular, the vehicle 10 can be provided as a kind of passive vehicle which traveling motion is induced by external forces; in such a configuration, the inventive kinematics provide for hanging/suspending the vehicle, but not for actively driving the vehicle 10 for any traveling motion. The drive section may also comprise at least one gear unit 18 configured for interacting with the track(s) and an energy storage unit. A sensor arrangement 40, e.g., comprising position sensors and velocity sensors and/or weight sensors and/or gyroscopes, may provide sensor data to the control unit 30.

Each suspension element 13 exhibits a first pulley 13.1 and a second pulley 13.2, and optionally, a wheel 13.3 is provided at the free end of the suspension element 13 (bearing point P13). The first and second pulleys are arranged on a lever arm 13.5 in distance from/to each other (y-offset, longitudinal extension y13 of lever arm); the bearing point P13 resp. the wheel 13.3 is arranged at a protruding section resp. suspension arm 13.6 (z-offset). At the free end of the suspension arm, a first electrical contact 13.4 (conductive slider for energy transfer) is provided in an arrangement geometrically corresponding to a/the electrical bus 1.3 of the respective profile 1.1. The first electrical contact 13.4 can e.g., also be provided via an L-shape extending above the wheel 13.3 or via counter wheels 16, i.e., rolling contact for connecting to a pole/phase/line of the electrical bus 1.3 on the bottom side of the profile units 1.1. The plurality of suspension elements 13 of a/the respective drive unit 11 can be interconnected via longitudinal connecting elements 15 which can ensure a closed loop 15a of interrelated suspension elements. Thus, the suspension elements 13 are coupled to the respective circumferential tracks.

In other words: The suspension elements preferably exhibit a wheel 13.3 performing a rolling motion on the profile, allowing for motion which is orthogonal to the motion predefined and evoked by the tracks, wherein the wheel is positioned orthogonally with respect to the first and second pulleys. The wheel can be motorized by means of further actuators or motors. The first pulley 13.1 is engaged with the first or second circumferential track, thereby following that track; also, the second pulley 13.2 is engaged with the first or second circumferential track, thereby following that track (which is different from the track engaged by the first pulley, i.e., vice versa). The lever arm 13.5 is preferably L-shaped, especially provided as integral element in one piece (massive, solid).

Preferably, the structure 1 and its raster 1a is defined by profiles 1.1 being arranged in parallel and with similar distance (pitch) to adjacent profiles. Each profile is preferably configured to support geometries/surface(s) which are adequate for interaction with the wheel(s) of the suspension elements (e.g., T-profile, C-profile, L-profile, I-profile) and profiles at least in some areas of the structure exhibit poles/phases/lines of an/the electrical bus for interaction with the suspension elements, and a series of such profiles preferably provides for a planar surface at least in sections.

By means of the circumferential tracks and the suspension elements, the (respective) drive unit provides for de-/coupling kinematics 20 which ensure both vertical motion kinematics 20a and non-circular pivot motion kinematics 20b. Thereby, de-/coupling of each suspension element 13 can be affected via circumferential motion along the tracks without the need of any axial telescopic motion within each suspension element. I.e., the suspension element 13 can be designed as a purely mechanic unit.

In context with logistic tasks, the vehicle 10 may exhibit a hoist unit 50 providing for a traction mechanism 51 (especially with rope winch) and having at least one transmission means 53 (especially a rope). The hoist unit 50 can be powered via power rails and the suspension elements connected to the power rails.

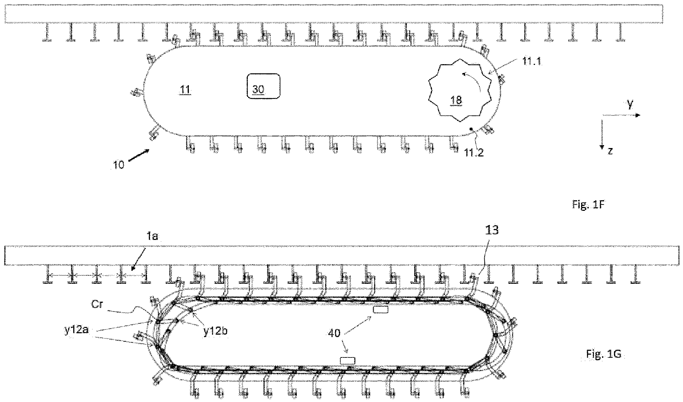

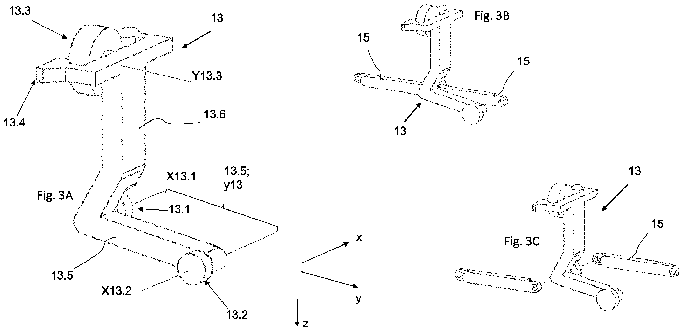

In the following, the kinematics provided by the guiding/driving motion along the circumferential tracks is described in general, first:
The first pulley 13.1 of each suspension element 13 rotates about a first pulley axis X13.1 and defines a first guiding point G13.1 (coupling the first track and the respective suspension element), and vice versa, the corresponding point of the corresponding circumferential track defines that first guiding point G13.1 for each suspension element. Likewise, the second pulley 13.2 of each suspension element 13 rotates about a second pulley axis X13.2 (which is preferably aligned in parallel) and defines a second guiding point G13.2 (coupling the second track and the respective suspension element). When referring to the kinematics of each suspension element, an instantaneous center of rotation Cr of each suspension element is defined by the axis X13.1 of the first pulley 13.1 being coupled to the first track 12a, wherein coupling/attachment/fixation can be ensured e.g., at the axial section between a/the suspension arm 13.6 and the first pulley 13.1 (cf. Fig. 1G and 3B). The two tracks 12a, 12b are arranged with respect to another in such a manner that the contacting/bearing point/area P13 of the respective suspension element 13 can be hooked or hitched on the ceiling structure. The wheel 13.3 of each suspension element rotates about a wheel axis Y13.3 which is preferably aligned orthogonally to the first and second pulley axis X13.1, X13.2. Since each suspension element 13 is coupled to the tracks 12a, 12b in predefined positions, namely in a predefined first longitudinal position y12a via the first pulley 13.1 and in a predefined second longitudinal position y12b via the second pulley 13.2, when driving the tracks resp. when guiding the suspension elements along the tracks, the bearing point P13 at the free end of the suspension element 13 is guided according to the relative position/contour and distance of the tracks.

In the figures, (x) designates a/the first spatial direction (especially cross direction, especially direction of longitudinal extension of T-profiles), and (y) designates a/the second spatial direction (especially longitudinal direction or momentary driving direction of the drive units), and (z) designates a/the third spatial direction (especially vertical direction).

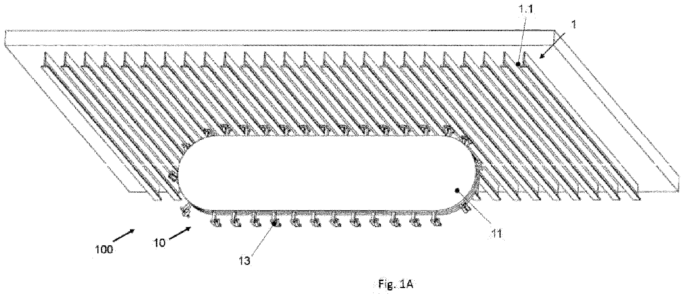

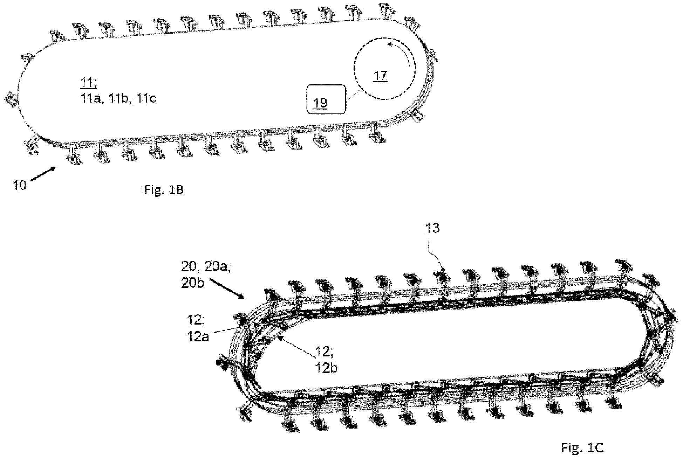

**Fig. 1A** shows a (ceiling) vehicle 10 exhibiting a first drive unit 11 and suspension elements 13, wherein a subset of the suspension elements 13 is momentarily coupled to a/the ceiling structure 1, namely to T-profiles. The suspension elements 13 are guided and also actively driven along two circumferential tracks (not shown, cf. Fig. 1C), and de-/coupling is carried out in curved sections of the tracks.

The vehicle 10 shown in Fig. 1A is suspended/hanging at a ceiling structure. Nonetheless, the vehicle 10 may also be suspended in a similar structure being arranged on the ground or at the wall. The vehicle is not necessarily provided in the form of a ceiling vehicle; rather, Fig. 1A illustrated an application/use at a ceiling structure.

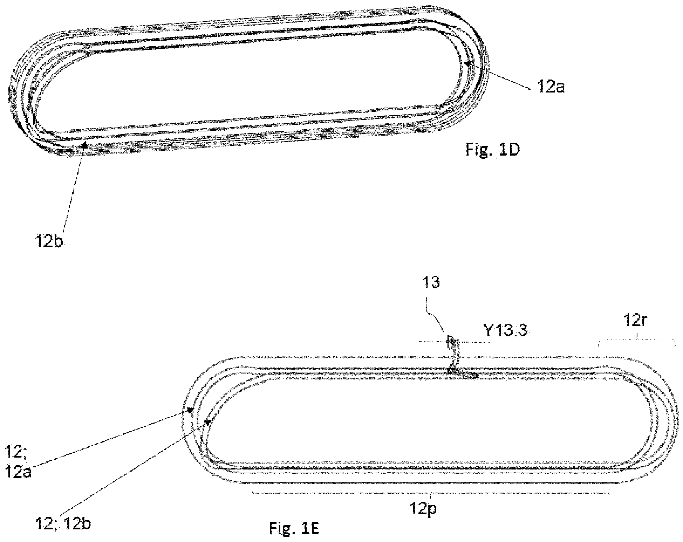

**Fig. 1B, 1C****,** **1D, 1E** show separate components of the respective first drive unit 11, 11a, 11b, 11c. At least one drive 17 provides for circumferential motion of the tracks 12a, 12b, especially by means of at least one gear unit 18 engaging the tracks. It is shown that the de-/coupling kinematics are provided within the curved sections 12r of the first and second circumferential tracks 12a, 12b. In contrast, within the parallel section(s) 12p, the suspension elements 13 remain in predefined relative positions at/with respect to the ceiling structure. In that section, the axis Y13.3 of the wheel 13.3 of the respective suspension element 13 is aligned parallel to the parallel section(s) 12p of the tracks.

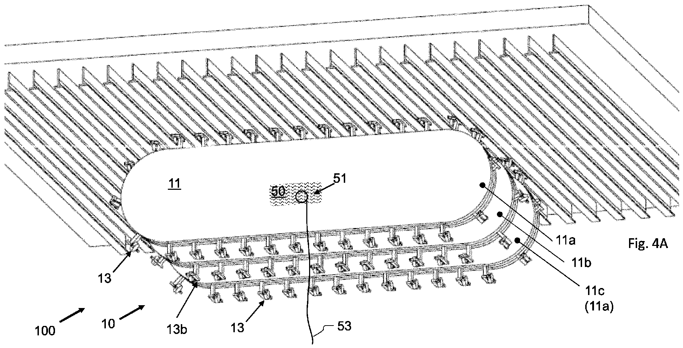

In case the vehicle exhibits several first drive units 11a, 11b, some of these components may also be arranged in a mirror-inverted manner, especially the suspension elements (cf. Fig. 4A). Thus, any detailed description of the figures relating to any separate/single component of the respective drive unit may also describe a similar configuration of any further drive units or any further redundant components.

**Fig. 1F, 1G** illustrate the curved sections 12r in more detail. It can be seen that both the radius of curvature and the distance of the tracks with respect to each other deviates/changes in value and direction, thereby effecting a pivot motion of the suspension arm 13.6 (protruding section) and the wheel 13.3 resp. bearing point P13 of the respective suspension element 13 (especially pivoting within the plane yz as shown in Fig. 1F and pivoting about an x-axis and around the instantaneous center of rotation Cr). Thus, both vertical motion kinematics 20a and non-circular pivot motion kinematics 20b can be provided by means of rigid/stiff components being guided/driven along two circumferential tracks with different shape/contour.

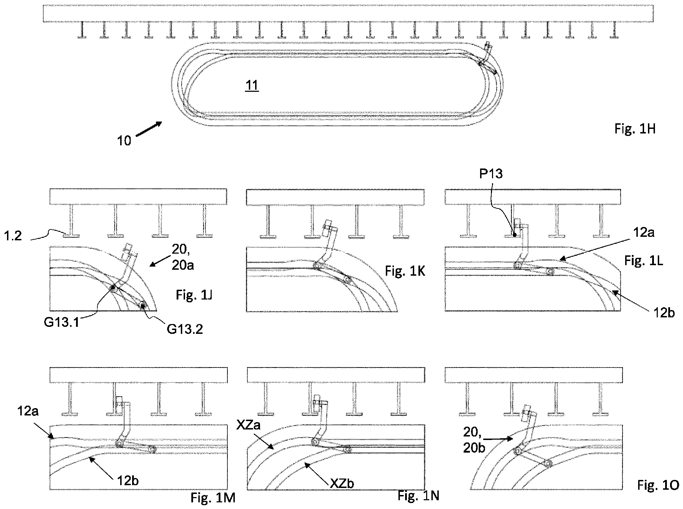

**Fig. 1H, 1J, 1K, 1L, 1M, 1N, 1O** show some more details of the de-/coupling kinematics 20. In particular, it can be seen that the first track 12a has a curvature bent up (upwards), thereby effecting a slight lifting of the wheel 13.3 from the wheel tread 1.2, namely when the first pulley 13.1 is passing that section. In particular, apart from one single section, the shape/contour XZb of the second circumferential track 12b runs (is arranged) within the shape/contour XZa of the first circumferential track 12a.

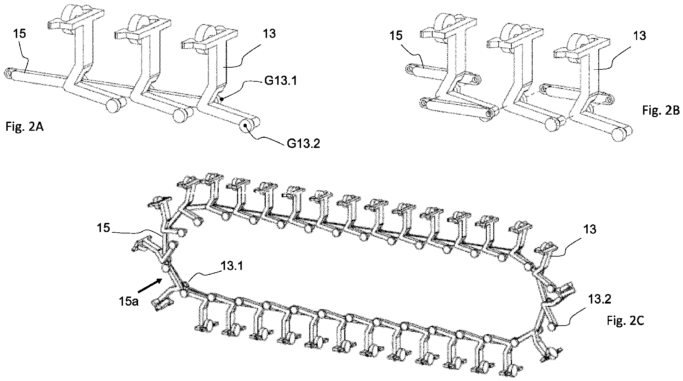

**Fig. 2A, 2B, 2C** show a plurality of suspension elements 13 being interconnected via longitudinal connecting elements 15 which thereby ensure a closed loop 15a of interrelated suspension elements. The suspension elements 13 are coupled to the respective circumferential tracks 12a, 12b via the first and second pulleys 13.1, 13.2.

In the embodiment shown in Fig. 2, the first and second pulleys 13.1, 13.2 are arranged on opposite lateral sides of the respective suspension element 13. Thus, the closed loop 15a of interrelated suspension elements is arranged between the first and second tracks 12a, 12b which extend on both lateral sides of the closed loop 15a.

The tracks 12a, 12b can be made of any kind of rail guide system components, in particular including at least one chain, belt, cable or the like traction or transmission means. The tracks 12a, 12b may comprise different guide/rail sections coupled together, each exhibiting a different radius of curvature or being linear. Also, the tracks 12a, 12b can be formed/made by one single continuous/coherent rail.

**Fig. 3A, 3B, 3C** show some more details of the suspension elements 13 and the connecting elements 15. E.g., the connecting elements 15 are coupled to the lever arm 13.5 at the axis X13.1 if the first pulley 13.1, thereby facilitating pivot motion about that axis (resp. around the respective instantaneous center of rotation Cr). The suspension elements 13 exhibit a first electrical contact (slider) 13.4 that has a recess in its center to accommodate the wheel 13.3.

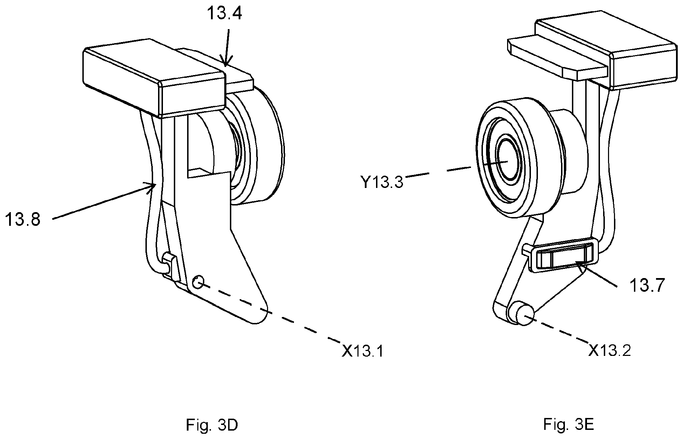

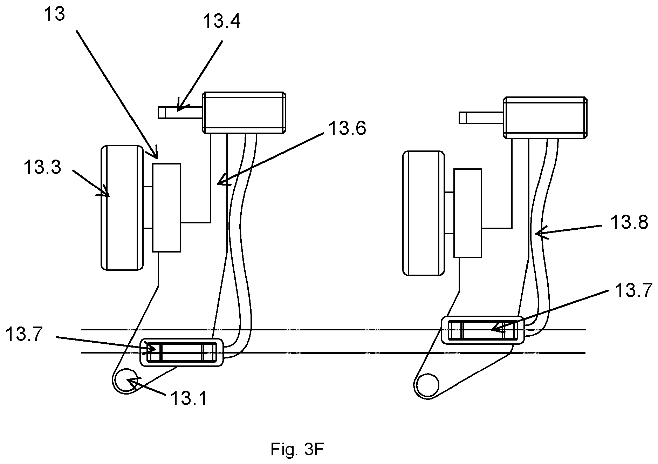

**Fig. 3D, 3E** show details of alternative suspension elements 13c configured for establishing an electrical connection with the structure 1. The suspension elements 13c, 13d exhibit first sliders 13.4 and second sliders 13.7. The first slider 13.4 and second slider 13.7 are connected via a cable/wire 13.8. The first slider 13.4 extends in an L-shape above the wheel 13.3 and can engage with the pole/phase/line of an electrical bus 1.3 integrated into the structure 1. The second slider 13.7 is connected to a conducting rail 10.5 in the vehicle 10 when the vehicle is suspended via this suspension element 13c. **Fig. 3F** shows suspension elements 13c with second sliders 13.7 positioned at different heights but on one mutual side such that they can connect to different conducting rails 10.5 in the vehicle 10 which are placed on one (common) side of the first drive unit 11.

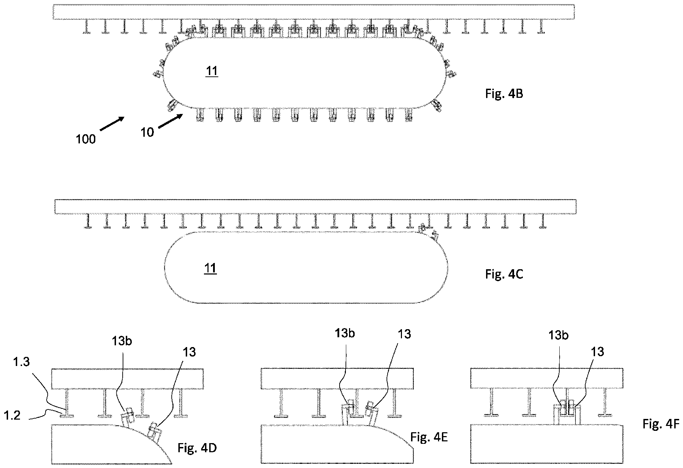

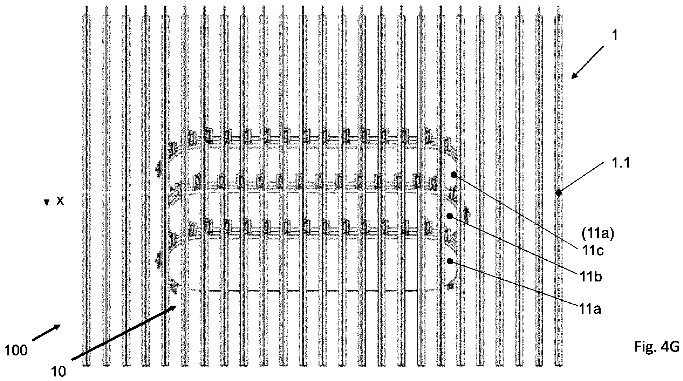

**Fig. 4A****,** **4B, 4C, 4D****,** **4E, 4F****,** **4G** show an embodiment of a vehicle 10 exhibiting three first drive units 11a, 11b, 11c which can be interrelated/connected e.g., via cross-beams or the like. In contrast to the configuration at the first drive unit 11a, the suspension elements 13b of the further first drive unit 11b are arranged in mirror-inverted manner, but the suspension elements 13 of the further first drive unit 11c are arranged in the same manner as the suspension elements 13 of the first drive unit 11a. As can be seen in Fig. 4E, 4F, that configuration allows for a very good security and stability level (both types of suspension elements 13, 13b are guided along the T-profiles, but on different lateral sides of the T-profiles). Alternatively, the vehicle 10 may only comprise two first drive units 11a, 11b. Some of the suspension elements 13 of the first drive units 11a, 11c are suspension elements 13c for establishing an electrical connection with the structure 1, and some of the suspension elements 13b of the further first drive unit arranged in mirror-inverted manner are also suspension elements 13d configured for establishing an electrical connection with the structure 1.

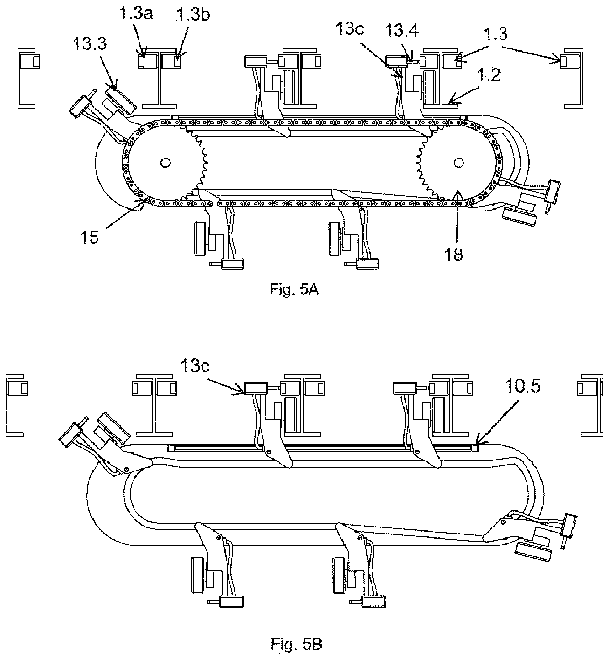

**Fig. 5A, 5B** show a first drive unit 11 exhibiting only suspension elements 13c configured for establishing an electrical connection with the structure 1. In the second view in **Fig. 5B****,** the chain elements 15 and the gear unit 18 are blanked out. In the structure 1, two poles/phases/lines of an electrical bus 1.3a are integrated into the structure 1. However, the first drive unit 11 depicted in **Fig. 5A, 5B** only connects to one pole/phase/line of the electrical bus 1.3a, while the other pole/phase/line of the electrical bus 1.3b can only be reached with a further first drive unit 11b arranged in a mirror-inverted manner, not shown here. The suspension elements 13c exhibit first and second sliders 13.4, 13.7, wherein the first sliders engage in the rail of the electrical bus 1.3a and the second sliders 13.7 connect to the conducting rail 10.5 in the vehicle 10, thus supplying the vehicle 10 with information and/or energy.

In the following, further aspects/details of embodiments of the present invention are described in more detail. For any reference signs or elements/components or aspects not explicitly mentioned/described, it is referred to above mentioned embodiments, respectively.

The embodiments described in the following passages exhibit a first drive unit comprising a chain drive, and the first circumferential track comprises a chain (with a closed loop of interrelated chain elements arranging the corresponding suspension elements and optionally also arranging counter wheel elements), and the longitudinal connecting elements of that first drive unit are provided in the form of chain elements.

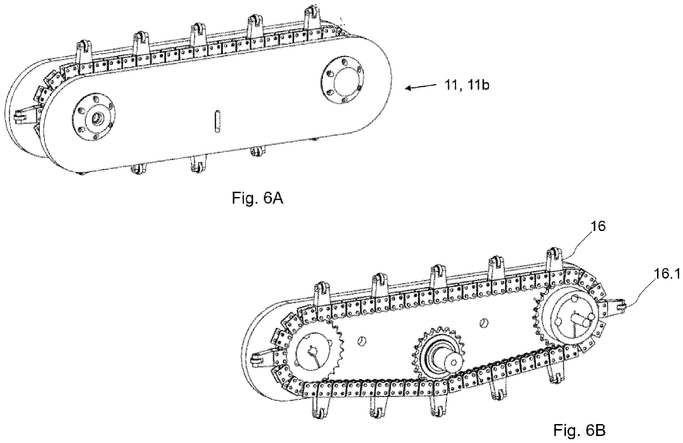

**Figures 6A, 6B** show electrical contacts 13.4, 13.7 of the suspension elements 13 of a first drive unit 11, 11b in the form of roller contacts as counter wheels 16.1, wherein the rest of the suspension elements 13 have been blanked out. This configuration is used when the poles/phases/lines are integrated on the side of the profiles facing the vehicle 10.

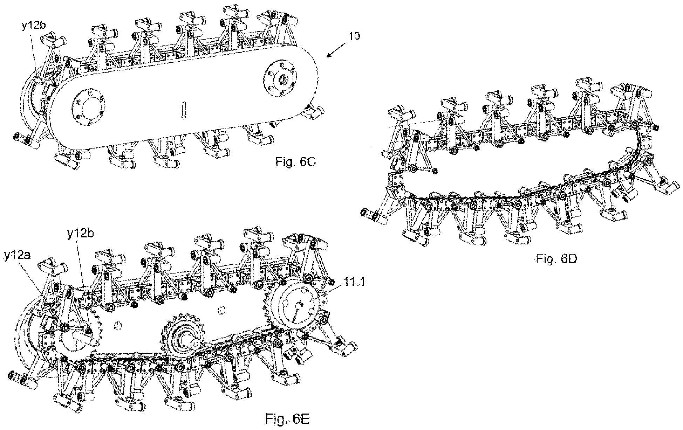

**Figures 6C, 6D, 6E** show some kinematic aspects of first drive units accommodating / arranging / guiding both suspension elements 13 and further suspension elements 13b. Such an arrangement also allows for providing de-/coupling kinematics for both a plurality of suspension elements 13 and a plurality of further suspension elements 13b, especially in such a manner that both types of suspension elements 13, 13b may interact and engage in the same (but asymmetrical) manner with the structure 1, especially at the same profile rail at opposite lateral sides, respectively. Such an arrangement may also ensure a high security and stability level already by means of one single first drive unit 11. Thus, scaling (two, three or even more) of the first drive units is realizable in even more flexible manner, and individual arrangements can be optimized for each application.

It should be noted that the first circumferential track resp. a/the chain may/can provide for guiding and driving both the suspension elements 13 and the further suspension elements 13b; both types of suspension elements 13, 13b can be coupled, e.g., via a protruding axial section (guiding bolt or shaft) to the chain structure which protrudes vis-à-vis of the first pulley 13.1, especially along its axis X13.1. In particular, the suspension elements 13 and the further suspension elements 13b are arranged with longitudinal offset (y) and mirror-inverted on both sides of the chain 15a. In particular, the longitudinal distance (y) of the respective suspension element 13 and the respective further suspension element 13b of a respective pair of suspension elements 13, 13b corresponds to the extension in cross direction (y) of each element/profile of the (ceiling) structure.

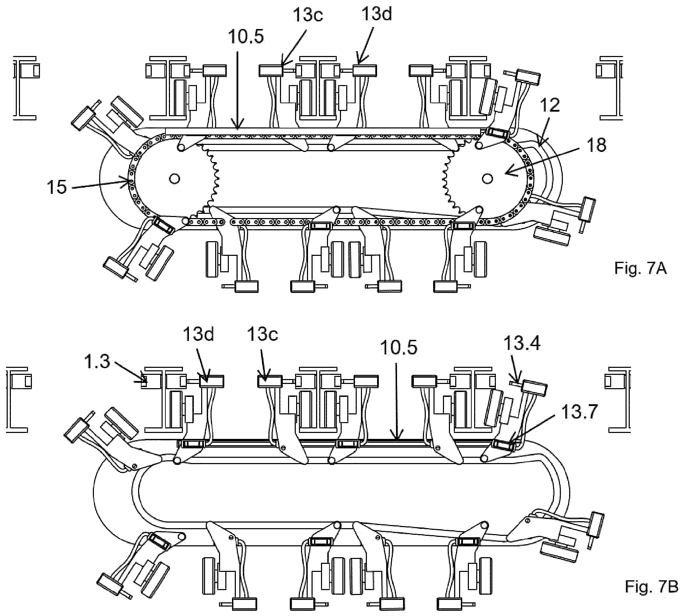

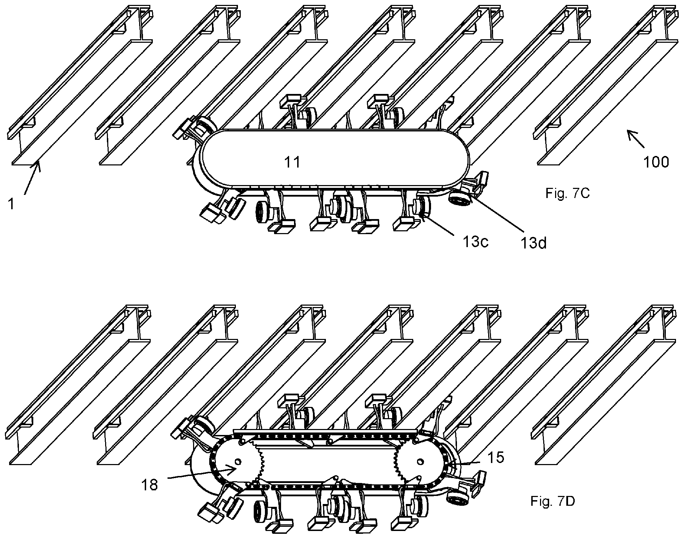

**Fig. 7A, 7B** show the arrangement from **Fig. 6C, 6D, 6E****,** wherein each of the suspension elements 13c, 13d (in Fig. 6 13, 13b) are configured for establishing an electrical connection with the structure 1. The suspension elements 13c, 13d connect to conducting rails 10.5 on both sides of the chain 15. The chain elements 15 and the gear unit 18 and the first conducting rail 10.5 are blanked out in Fig. 7B to show the second conducting rail 10.5 on the back side of the drive unit. In **Fig. 7C, 7D****,** the drive unit is shown in a perspective view with multiple suspension elements 13c, 13d being coupled into the structure 1.

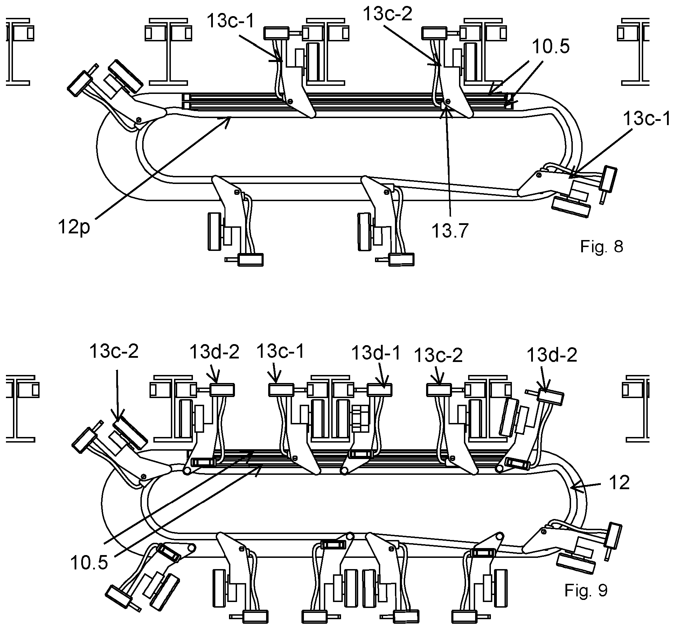

**Fig. 8** shows a first drive unit 11 hanging in a ceiling structure 1, wherein the chain elements and the gear unit have been blanked out to show two conducting rails 10.5 which are arranged on one mutual side at different heights, e.g., spaced 0.5 cm apart on the back side of the first drive unit 11. The conducting rails 10.5 are arranged in parallel and accommodate a linear section 12p of the track. Each suspension element 13c is configured for establishing an electrical connection with the structure 1, wherein every second suspension element 13c connects to the same pole/phase/line of the electrical bus 1.3 in the structure. This means that the second sliders 13.7 of the suspension elements 13c are arranged at corresponding heights in an alternating manner, i.e., the first suspension element 13c-1 connects to a first conducting rail, the second suspension element 13c-2 connects to a second conducting rail, the third suspension element 13c-1 connects to the first conducting rail, the fourth 13c-2 connects to the second conducting rail, and so on. In this configuration, the first drive unit 11 comprises an even number of suspension elements 13c to allow an easy integration with the structure 1 by arranging the poles/phases/lines of the electrical bus 1.3 on the side of the profiles 1.1 in a simple alternating manner. The first drive unit 11 is always connected to the structure 1 via at least two suspension elements 13c-1, 13c-2, i.e., before a suspension element 13c-1 connected to the first pole/phase/line of the electrical bus 1.3 is decoupled from the structure 1, another suspension element 13c-1 is coupled into the structure and electrically connected to the first pole/phase/line of the electrical bus 1.3.

**Fig. 9** shows an arrangement of a first drive unit 11 accommodating / arranging / guiding both suspension elements 13, 13c and further suspension elements 13b, 13d. Such an arrangement also allows for providing de-/coupling kinematics for both a plurality of suspension elements 13 and a plurality of further suspension elements 13b, especially in such a manner that both types of suspension elements 13, 13b may interact and engage in the same (but asymmetrical) manner with the structure 1, especially at the same profile rail at opposite lateral sides, respectively. Such an arrangement may also ensure a high security and stability level already by means of one single first drive unit 11. All suspension elements 13 shown are configured for establishing an electrical connection with the electrical bus 1.3 integrated into the structure 1. The two conducting rails 10.5 to which the further suspension elements 13b connect are also blanked out but they are arranged at the same height as the conducting rails 10.5 shown but facing the opposite direction towards the suspension elements 13, 13b. Just as in Fig. 8, each alternating suspension element 13c-1, 13c-2, 13d-1, 13d-2 facing the same direction exhibits a second slider 13.7 at alternating heights to connect to the upper and lower conducting rail 10.5 alternatingly. This way, it is possible to connect to electrical busses having more than two poles/phases/lines (e.g., four) resulting, e.g., in fast communication times via the bus or to supply large amounts of power because of the distribution of current over the plurality of suspension elements.

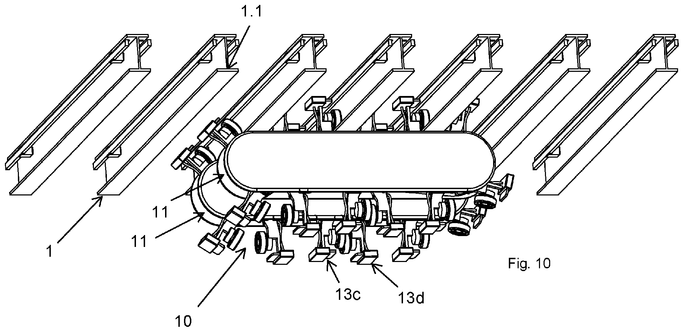

In **Fig. 10** a vehicle 10 is shown suspended in the structure 1 with multiple first drive units 11 accommodating / arranging / guiding both suspension elements 13 and further suspension elements 13b. Here, every suspension element 13c, 13d is configured for establishing an electrical connection to the structure 1. However, in view of scaling and in view of e.g., Fig. 4G, with a higher amount of suspension elements 13, it is not necessary to equip every suspension element 13 with electrical contacts 13.4, 13.7. Also, in the case in which the vehicle exhibits a particularly high amount of suspension elements via which it is coupled to the structure, it becomes possible to equip only every few profiles with poles/phase/lines of the electrical bus.

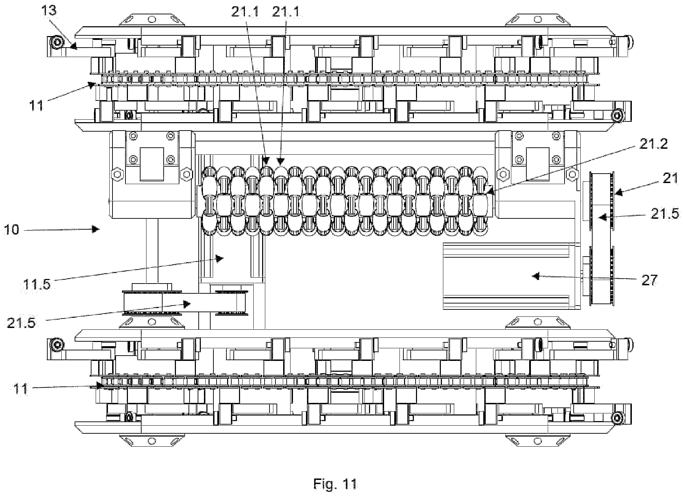

**Figure 11** shows a top view of a ceiling vehicle 10 exhibiting two first drive units accommodating / arranging / guiding both suspension elements 13 and further suspension elements 13b for secure coupling. A first motor 11.5 connected to the first drive units 11, as well as a second motor 27 connected to a second drive unit 21 and a holonomic wheel 21.1, are shown. The two motors 11.5, 27 can be controlled individually via a control unit 30, such that the ceiling vehicle 10 is configured for omnidirectional movement along the structure 1. The holonomic wheelset 21.2 consists of a plurality of coaxially aligned holonomic wheels 21.1, wherein the holonomic wheels exhibit a plurality of equally distributed rollers around their circumference, which allow them to move passively in the direction of the first drive units and allow active traveling in the second direction when they are actively rotated along the axis of the holonomic wheelset 21.2. The first motor 11.5 is shown below the holonomic wheel 21.1 and is connected to a belt 21.5 to drive the first drive units 11. The second motor 27 is arranged in parallel to the holonomic wheel 21.1 and connected to it via a second belt 21.5. A return mechanism ensures grip of the holonomic wheel 21.1 with the structure 1. The vehicle 10 is able to actively move in two spatial directions, the first spatial direction being predefined by the structure 1 and a second spatial direction being defined by the guiding/driving motion of the two first drive units. The motors 11.5, 27 can be powered via a battery pack and super capacitors not shown, or they can be connected to the conducting rails connected via the suspension elements 13 to power rails 1.3 in the structure.

The embodiments shown here are merely examples of the present invention and should not be construed as limiting. The invention is defined by the following claims.

### List of reference signs

- 1: structure, e.g. ceiling structure
- 1a: raster defined by the structure
- 1.1: profile rail, especially T-profile resp. T-rail
- 1.2: wheel tread
- 1.3: power rail
- 10: crawler type vehicle
- 11: first drive unit (especially crawler track-like)
- 11.1: drive mechanism
- 11.2: lateral area resp. surface shell of the drive unit(s)
- 11.5: (first) motor
- 11a: first drive unit, especially chain drive unit
- 11b: further first drive unit
- 11c: further first drive unit
- 12: circumferential track
- 12a: first circumferential track, especially comprising a chain
- 12b: second circumferential track
- 12p: parallel section / linear section of the track
- 12r: redirection section / curved section of the track
- 13: suspension element resp. chain element
- 13b: further suspension element
- 13c: suspension element configured for establishing an electrical connection
- 13c-1: suspension element configured for establishing an electrical connection (second slider first height)
- 13c-1: suspension element configured for establishing an electrical connection (second slider second height)
- 13d: further suspension element configured for establishing an electrical connection
- 13d-1: further suspension element configured for establishing an electrical connection (second slider first height)
- 13d-1: further suspension element configured for establishing an electrical connection (second slider second height)
- 13.1: first pulley
- 13.2: second pulley
- 13.3: wheel
- 13.4: first electrical contact, especially slider
- 13.5: lever arm
- 13.6: protruding section / suspension arm
- 13.7: second electrical contact, especially slider
- 15: longitudinal connecting element, especially chain element
- 15a: closed loop of interrelated suspension elements, especially chain
- 16: counter mechanism
- 16.1: counter wheel
- 18: gear unit
- 18a: further gear unit
- 20: de-/coupling kinematics
- 20a: vertical motion kinematics
- 20b: non-circular pivot motion kinematics
- 21: (second) drive unit
- 21.1: holonomic wheel
- 21.2: holonomic wheelset
- 21.5: belt
- 27: second motor
- 30: control unit
- 40: sensor arrangement
- 50: hoist unit
- 51: traction mechanism, especially rope winch
- 53: transmission means, especially rope
- 100: crawler type (ceiling) vehicle arrangement
- Cr: instantaneous centre of rotation
- G13.1: first guiding point or axis (coupling the first track and the suspension element)
- G13.2: second guiding point or axis (coupling the second track and the suspension element)
- P13: contacting/bearing point/area of the suspension element with the ceiling structure
- X13.1: first pulley axis
- X13.2: second pulley axis
- XZa: shape/contour of the first circumferential track
- XZb: shape/contour of the second circumferential track
- Y13.3: wheel axis
- y12a: predefined first longitudinal positions
- y12b: predefined second longitudinal positions
- y13: longitudinal extension of lever arm
- x: first spatial direction, especially direction of longitudinal extension of T-profiles
- y: second spatial direction, especially longitudinal direction or driving direction
- z: third spatial direction, especially vertical direction

## Claims

1. Crawler type vehicle (10) configured for traveling in a suspended manner, wherein the vehicle (10) exhibits:
- a plurality of suspension elements (13, 13b, 13c, 13d) configured for suspending the vehicle (10) and configured for coupling the vehicle (10) to a structure (1), wherein at least two of the suspension elements (13c, 13d) each comprise at least two electrically connected electrical contacts (13.4, 13.7) configured for establishing an electrical connection between the structure (1) and the vehicle (10),
wherein the vehicle (10) is configured for moving along the structure (1) by decoupling a subset of the plurality of suspension elements (13, 13b, 13c, 13d) from respectively coupling them into the structure (1),
wherein the first electrical contact (13.4) of a first suspension element (13c) for establishing an electrical connection is electrically connected to a first pole/phase/line of an electrical bus (1.3) in the structure (1) when the vehicle (10) is coupled to the structure (1) via the first suspension element (13c) and the first electrical contact (13.4) of a second suspension element (13d) for establishing an electrical connection is electrically connected to a second pole/phase/line of the electrical bus (1.3) in the structure (1) when the vehicle (10) is coupled to the structure (1) via the second suspension element (13d), and
wherein the second electrical contacts (13.7) of the suspension elements (13c, 13d) are each connected to a respective pole/phase/line of an internal bus (10.5) of the vehicle (10) at least when the vehicle (10) is coupled to the structure (1) via the suspension elements (13c, 13d) for establishing an electrical connection,
- at least one first drive unit (11, 11a, 11b, 11c) configured for circumferential motion and accommodating a first circumferential track (12a) and a second circumferential track (12b) having a different circumferential shape/contour than the first circumferential track, wherein the suspension elements (13, 13b, 13c, 13d) are attached to the first circumferential track (12a) at predefined first longitudinal positions corresponding to a predefined raster (1a), wherein the suspension elements (13, 13b, 13c, 13d) are guided along the two circumferential tracks (12, 12a, 12b) by the circumferential motion,
wherein the first and second circumferential tracks (12a, 12b) are shaped in such a manner that the suspension elements (13, 13b) are de-/coupled from/into the structure (1) when passing a curved section (12r) of the tracks.

2. Crawler type vehicle (10) according to claim 1, wherein a bearing point (P13) at a free end of the suspension element (13) is guided according to the relative position/contour and distance of the corresponding tracks (12a, 12b).

3. Crawler type vehicle (10) according to claim 1, wherein the first electrical contacts (13.4) of the suspension elements (13c, 13d) configured for establishing an electrical connection with the structure (1) exhibit a first slider (13.4) for slidingly connecting to power rails (1.3) of a corresponding pole/phase integrated in the structure (1) and wherein the second electrical contacts (13.7) of the suspension elements (13c, 13d) exhibit a second slider (13.7) for a slidable contact with conducting rails (10.5) of the corresponding pole/phase, wherein each first slider (13.4) is electrically connected to its corresponding second slider (13.7) of the respective suspension element (13c, 13d).

4. Crawler type vehicle (10) according to any of the preceding claims, wherein the vehicle (10) comprises electronics connected to the internal bus (10.5) for supplying the vehicle (10) with power and/or wherein the vehicle (10) comprises an energy storage and/or wherein the vehicle (10) comprises connection means for connecting to equipment, wherein the equipment can be supplied with power via the connection means.

5. Crawler type vehicle (10) according to any of the preceding claims, wherein, when the vehicle (10) is moving, when the suspension elements (13c, 13d) for establishing an electrical connection are coupled into the structure (1), the second electrical contacts (13.7) are connected to the conducting rail (10.5) such that the first electrical contact 13.4 has a defined potential before the first electrical contact (13.4) is in proximity or connected to the electrical bus (1.3), and when the suspension elements (13c, 13d) are decoupled from the structure (1), the first electrical contacts (13.4) are disconnected from the electrical bus (1.3) before the second electrical contacts (13.7) are disconnected from the conducting rail (10.5), or wherein, when the vehicle (10) is moving, when the suspension elements (13c, 13d) for establishing an electrical connection are coupled into the structure (1), the first electrical contacts (13.4) are connected to the electrical bus (1.3) before the second electrical contacts (13.7) are in proximity or connected to the conducting rail (10.5), and when the suspension elements (13c, 13d) are decoupled from the structure (1), the second electrical contacts (13.7) are disconnected from the conducting rail (10.5) before the first electrical contacts (13.4) are disconnected from the electrical bus (1.3).

6. Crawler type vehicle (10) according to claim 1, wherein the vehicle (10) further exhibits:
- at least two conducting rails (10.5) placed in parallel at least to sections of the circumferential tracks (12a, 12b), wherein the at least two suspension elements (13c, 13d) comprise means for dis-/connecting from/to the conducting rails (10.5) when the suspension elements (13c, 13d) are de-/coupled from/into the structure (1).

7. Crawler type vehicle (10) according to claim 1 or 6, wherein the at least one drive unit (11, 11a, 11b, 11c) comprises an even number of suspension elements (13, 13b, 13c, 13d).

8. Crawler type vehicle (10) according to claim 1 or any of preceding claims 6-7, wherein the suspension elements (13c, 13d) configured for establishing an electrical connection with the structure (1) are distributed along the at least one first drive unit (11, 11a, 11b, 11c) such that when the vehicle (10) is moving along the structure (1) a suspension element (13c, 13d) for the electrical connection of a respective pole/phase/line is coupled into the structure (1) before the otherwise last suspension element (13c, 13d) connected to the respective pole/phase/line is decoupled from the structure (1).

9. Crawler type vehicle (10) according to claim 1 or any of preceding claims 6 - 8, wherein the at least one first drive unit (11, 11a, 11b, 11c) of the crawler type vehicle (10) is configured for enabling a closed loop trajectory of the suspension elements (13, 13b);
wherein the first and second circumferential tracks (12a, 12b) are shaped in such a manner that the suspension elements (13, 13b) are de-/coupled from/into the structure (1) only when passing a curved section of the tracks;
wherein the suspension elements (13, 13b) are fixedly attached/coupled by means of a first pulley to/with the first circumferential track (12a), wherein the suspension elements (13, 13b) are guided within the second circumferential track (12b) by means of a second pulley respectively, wherein the first and second pulley preferably are arranged at a lever arm of the respective suspension element, wherein the respective suspension element preferably has an L-shape;
and/or wherein each suspension element exhibits a first pulley and a second pulley arranged in longitudinal distance with respect to the first pulley at a lever arm of the respective suspension element, wherein the suspension element is coupled to the first and second tracks via the first and second pulleys;
and/or wherein each suspension element exhibits a lever arm accommodating/supporting a/the pulley guided by the second track, wherein the pulley is arranged at a free end of the lever arm, and wherein in a linear section of the track, the lever arm is pointing in the driving/traveling direction, at least roughly;
and/or wherein the suspension elements (13, 13b) are connected to each other by means of longitudinal connecting elements, especially by longitudinal connecting elements being connected at the axis of a/the first pulley of the respective suspension element, thereby forming a closed loop of interrelated suspension elements (13, 13b) distanced to each other in the predefined raster;
wherein the first circumferential track (12a) exhibits a chain or is provided/defined by a chain forming a closed loop of interrelated chain elements connecting the suspension elements (13, 13b), wherein the vehicle (10) exhibits a plurality of counter wheels, especially configured and arranged for frontally interacting with the ceiling structure (1), wherein the plurality of counter wheels are preferably coupled to/with the first circumferential track (12a), especially coupled to chain elements of the first circumferential track;
wherein the vehicle (10) exhibits a further first drive unit accommodating further circumferential tracks (12a, 12b), wherein a plurality of further suspension elements (13b) are attached to the further circumferential tracks in predefined longitudinal positions corresponding to a/the predefined raster and are configured for suspending the vehicle (10) and for coupling the vehicle (10) to the structure, especially such that the vehicle (10) is secured with respect to opposite directions at the structure, wherein the vehicle (10) exhibits further suspension elements (13b) which are attached to further circumferential tracks (12a, 12b), wherein the suspension elements (13) and the further suspension elements (13b) momentarily engaging the structure (1) are securing/blocking the vehicle (10) at the structure (1) with respect to the driving/traveling direction and opposite thereto,
and/or wherein the vehicle (10) exhibits a further drive unit which exhibits the same configuration as a/the first drive unit but with mirror-inverted arrangement of the further suspension elements (13b) and further circumferential tracks (12, 12a, 12b), wherein the further suspension elements (13b) are guided/driven in a direction opposite to the guiding direction of the suspension elements (13) of the first drive unit, especially such that both the respective suspension elements (13) and further suspension elements (13b) are simultaneously de-/coupling to/from the structure;
wherein the at least one first drive unit is configured for lifting the respective suspension element out of the structure (1) in an unloaded state, especially such that the at least one first drive unit provides for both de-/coupling kinematics for a subset of momentarily unloaded suspension elements (13, 13b) and suspension of the vehicle (10) by a subset of momentarily loaded suspension elements (13, 13b) at the same time;
and/or wherein the at least one first drive unit has a substantially plane configuration;
and/or wherein the vehicle (10) exhibits at least two first drive units arranged in parallel to each other;
and/or wherein the circumferential tracks (12a, 12b) are respectively guided/driven in a plane, extending in two-dimensional manner;
and/or wherein the at least one first drive unit is coupled by means of at least three suspension elements (13, 13b);
and/or wherein the respective suspension element has an L-shape which provides for two arms defining the relative arrangement of a/the wheel and first and second pulleys of the respective suspension element.

10. Crawler type vehicle (10) according to claim 1 or any of the preceding claims 6 - 9, wherein the vehicle (10) comprises four first drive units (11, 11a, 11b, 11c), all of which are arranged in parallel, with two of the first drive units (11, 11a, 11b, 11c) with mirror-inverted arrangement of the further suspension elements (13b) and further circumferential tracks (12, 12a, 12b), wherein the further suspension elements (13b) are guided/driven in a direction opposite to the guiding direction of the suspension elements (13) of the first drive unit, especially such that both the respective suspension elements (13) and further suspension elements (13b) are simultaneously de-/coupling to/from the structure, wherein the first drive units (11, 11a, 11b, 11c) are arranged pairwise, wherein the pairs are horizontally spaced apart, wherein at least one first drive unit (11, 11a, 11b, 11c) of each pair comprises suspension elements (13c, 13d) for establishing an electrical connection to the structure (1).

11. Crawler type vehicle (10) according to any of the preceding claims, wherein every suspension element (13, 13b, 13c, 13d) of the vehicle (10) is configured for establishing an electrical connection with the structure (1).

12. Crawler type vehicle (10) according to any of the preceding claims, wherein the vehicle (10) exhibits:
- at least one second drive unit (21) configured for enabling locomotion of the ceiling vehicle (10) in at least two spatial directions, namely a first spatial direction being predefined by the structure (1) and a second spatial direction being defined by the guiding/driving motion of the at least one first drive unit (11), wherein the second spatial direction is orthogonal to the first spatial direction, wherein the second drive unit (21) is configured for locomotion of the vehicle (10) in the first spatial direction providing for at least two-dimensional locomotion capability of the vehicle (10), wherein the respective suspension element (13) exhibits at least one wheel (13.3) which is arranged and configured for being guided along the structure (1), especially on a wheel tread 1.2 of a respective/corresponding profile of the structure,
- at least two individually controllable motors (11.5, 27), wherein at least one first drive unit (11) and at least one second drive unit (21) is connected to at least one motor (11.5, 27), and wherein the motors (11.5, 27) for the first drive unit(s) (11) and the second drive units (21) are different, providing for active two-dimensional traveling capability of the vehicle, wherein the motors (11.5, 27) are electrically connected to the energy storage and/or to the conducting rails (10.5).

13. Crawler type vehicle (10) according to any of the preceding claims, wherein the vehicle (10) exhibits two conducting rails (10.5), wherein the conducting rails (10.5) are placed on opposite sides of one or more first drive units (11, 11a, 11b, 11c), wherein the second electrical contact (13.7), especially slider, of one suspension element (13c) is placed on one side and the second electrical contact (13.7), especially slider, of a second suspension element (13d) is placed on another side;
or wherein the vehicle (10) exhibits two conducting rails (10.5), wherein the conducting rails (10.5) are placed on one side of the at least one first drive unit (11, 11a, 11b, 11c) vertically spaced apart, wherein the second electrical contact (13.7), especially slider, of one suspension element (13c) is placed on one side at a corresponding first height and the second electrical contact (13.7), especially slider, of a second suspension element (13d) is placed on the same side at a corresponding second height.

14. Crawler type vehicle (10) according to any of claims 1 - 12, wherein the vehicle (10) exhibits four conducting rails (10.5), wherein two conducting rails (10.5) are each placed on opposite sides of one or more first drive units (11, 11a, 11b, 11c), wherein the second electrical contacts (13.7) of two suspension elements (13c-1, 13c-2) are placed on one side and the second electrical contacts (13.7) of two second suspension elements (13d-1, 13d-2) are placed on another side, and wherein the two conducting rails (10.5) that are placed on one side of the at least one first drive unit (11, 11a, 11b, 11c) respectively are spaced vertically apart, wherein the second electrical contacts (13.7) of the suspension elements (13c-1, 13d-1) are placed on one side at a corresponding first height and the second electrical contacts (13.7) of the second suspension elements (13c-2, 13d-2) are each placed on the same side at a corresponding second height.

15. Method of suspending a crawler type vehicle (10) at a structure (1) for traveling in a suspended manner along the structure, especially a crawler type vehicle (10) according to one of claims 1 to 14, wherein the vehicle (10) is suspended by means of a plurality of suspension elements (13, 13b, 13c, 13d) coupling the vehicle (10) to the structure (1), wherein a circumferential guiding/driving motion is defined by first and second circumferential tracks (12a, 12b) having a different circumferential shape/contour, wherein the suspension elements (13, 13b, 13c, 13d) are attached to the first circumferential track at predefined first longitudinal positions corresponding to a raster defined by the structure, wherein the vehicle (10) is suspended such that it can move along the structure (1) by decoupling a subset of the plurality of suspension elements (13, 13b, 13c, 13d) from resp. coupling them into the structure (1) when the suspension elements (13, 13b, 13c, 13d) are guided along the circumferential tracks (12a, 12b) by the circumferential motion, wherein the circumferential motion is transmitted/transferred by the suspension elements (13, 13b, 13c, 13d) momentarily engaging the structure (1), wherein the circumferential motion is provided by first drive units (11a, 11b), and wherein the vehicle (10) is electrically connected to an electrical bus (1.3) integrated into the structure (1), wherein it is preferably ensured that at least two suspension elements (13c, 13d) are connected to at least one respective pole/phase/line of the electrical bus (1.3) at all times, preferably to each pole/phase/line of the electrical bus (1.3).

## Patentansprüche

1. Raupenfahrzeug (10), das für den angehängten Fahrbetrieb ausgelegt ist, wobei das Fahrzeug (10) aufweist:
- eine Vielzahl von Aufhängungselementen (13, 13b, 13c, 13d), die zum Anhängen des Fahrzeugs (10) und zum Koppeln des Fahrzeugs (10) an eine Struktur (1) ausgelegt sind, wobei mindestens zwei der Aufhängungselemente (13c, 13d) jeweils mindestens zwei elektrisch verbundene elektrische Kontakte (13.4, 13.7) umfassen, die zum Herstellen einer elektrischen Verbindung zwischen der Struktur (1) und dem Fahrzeug (10) ausgelegt sind, wobei das Fahrzeug (10) dazu ausgelegt ist, sich entlang der Struktur (1) zu bewegen, indem ein Teil der Vielzahl von Aufhängungselementen (13, 13b, 13c, 13d) von ihrer jeweiligen Kopplung an die Struktur (1) entkoppelt wird,
wobei der erste elektrische Kontakt (13.4) eines ersten Aufhängungselements (13c) zum Herstellen einer elektrischen Verbindung elektrisch mit einem ersten Pol/einer ersten Phase/einer ersten Leitung eines elektrischen Busses (1.3) in der Struktur (1) verbunden ist, wenn das Fahrzeug (10) über das erste Aufhängungselement (13c) an die Struktur (1) gekoppelt ist, und der erste elektrische Kontakt (13.4) eines zweiten Aufhängungselements (13d) zur Herstellung einer elektrischen Verbindung elektrisch mit einem zweiten Pol/einer zweiten Phase/einer zweiten Leitung des elektrischen Busses (1.3) in der Struktur (1) verbunden ist, wenn das Fahrzeug (10) über das zweite Aufhängungselement (13d) an die Struktur (1) gekoppelt ist, und
wobei die zweiten elektrischen Kontakte (13.7) der Aufhängungselemente (13c, 13d) jeweils mit einem entsprechenden Pol/einer entsprechenden Phase/einer entsprechenden Leitung eines internen Busses (10.5) des Fahrzeugs (10) verbunden sind, zumindest wenn das Fahrzeug (10) über die Aufhängungselemente (13c, 13d) zur Herstellung einer elektrischen Verbindung an die Struktur (1) gekoppelt ist,
- mindestens eine erste Antriebseinheit (11, 11a, 11b, 11c), die für eine Umfangsbewegung ausgelegt ist und eine erste Umfangsschiene (12a) sowie eine zweite Umfangsschiene (12b) aufweist, die eine andere Umfangsform/-kontur als die erste Umfangsschiene aufweist, wobei die Aufhängungselemente (13, 13b, 13c, 13d) an der ersten Umfangsschiene (12a) an vordefinierten ersten Längspositionen befestigt sind, die einem vordefinierten Raster (1a) entsprechen, wobei die Aufhängungselemente (13, 13b, 13c, 13d) durch die Umfangsbewegung entlang der beiden Umfangsschienen (12, 12a, 12b) geführt werden, wobei die erste und die zweite Umfangsschiene (12a, 12b) derart geformt sind, dass die Aufhängungselemente (13, 13b) beim Passieren eines gekrümmten Abschnitts (12r) der Schienen von der Struktur (1) entkoppelt bzw. in diese eingekoppelt werden.

2. Raupenfahrzeug (10) nach Anspruch 1, wobei ein Lagerpunkt (P13) an einem freien Ende des Aufhängungselements (13) entsprechend der relativen Position/Kontur und dem Abstand der entsprechenden Bahnen (12a, 12b) geführt wird.

3. Raupenfahrzeug (10) nach Anspruch 1, wobei die ersten elektrischen Kontakte (13.4) der Aufhängungselemente (13c, 13d), die zum Herstellen einer elektrischen Verbindung mit der Struktur (1) ausgebildet sind, einen ersten Schleifer (13.4) zum gleitenden Verbinden mit Stromschienen (1.3) eines entsprechenden, in die Struktur (1) integrierten Pols/einer entsprechenden Phase aufweisen, und wobei die zweiten elektrischen Kontakte (13.7) der Aufhängungselemente (13c, 13d) einen zweiten Schieber (13.7) für einen gleitenden Kontakt mit Stromschienen (10.5) des entsprechenden Pols/der entsprechenden Phase aufweisen, wobei jeder erste Schieber (13.4) elektrisch mit seinem entsprechenden zweiten Schieber (13.7) des jeweiligen Aufhängungselements (13c, 13d) verbunden ist.

4. Raupenfahrzeug (10) nach einem der vorstehenden Ansprüche, wobei das Fahrzeug (10) eine mit dem internen Bus (10.5) verbundene Elektronik zur Stromversorgung des Fahrzeugs (10) umfasst und/oder wobei das Fahrzeug (10) einen Energiespeicher umfasst und/oder wobei das Fahrzeug (10) Verbindungsmittel zum Anschluss an Geräte umfasst, wobei die Geräte über die Verbindungsmittel mit Strom versorgt werden können.

5. Raupenfahrzeug (10) nach einem der vorstehenden Ansprüche, wobei, wenn sich das Fahrzeug (10) bewegt und die Aufhängungselemente (13c, 13d) zum Herstellen einer elektrischen Verbindung in die Struktur (1) eingekoppelt sind, die zweiten elektrischen Kontakte (13.7) mit der Stromschiene (10.5) verbunden sind, so dass der erste elektrische Kontakt (13.4) ein definiertes Potential aufweist, bevor sich der erste elektrische Kontakt (13.4) in der Nähe des elektrischen Busses (1.3) befindet oder mit diesem verbunden ist, und wenn die Aufhängungselemente (13c, 13d) von der Struktur (1) entkoppelt sind, die ersten elektrischen Kontakte (13.4) von der elektrischen Sammelschiene (1.3) getrennt werden, bevor die zweiten elektrischen Kontakte (13.7) von der Stromschiene (10.5) getrennt werden, oder wobei, wenn sich das Fahrzeug (10) bewegt und die Aufhängungselemente (13c, 13d) zur Herstellung einer elektrischen Verbindung in die Struktur (1) eingekoppelt sind, die ersten elektrischen Kontakte (13.4) mit dem elektrischen Sammelschienen (1.3) verbunden werden, bevor sich die zweiten elektrischen Kontakte (13.7) in der Nähe der Stromschiene (10.5) befinden oder mit dieser verbunden sind, und wenn die Aufhängungselemente (13c, 13d) von der Struktur (1) entkoppelt sind, werden die zweiten elektrischen Kontakte (13.7) von der Stromschiene (10.5) getrennt, bevor die ersten elektrischen Kontakte (13.4) von der elektrischen Sammelschiene (1.3) getrennt werden.

6. Raupenfahrzeug (10) nach Anspruch 1, wobei das Fahrzeug (10) ferner aufweist:
- mindestens zwei Stromschienen (10.5), die zumindest zu Abschnitten der Umfangsspuren (12a, 12b) parallel angeordnet sind, wobei die mindestens zwei Aufhängungselemente (13c, 13d) Mittel zum Trennen von bzw. Verbinden mit den Stromschienen (10.5) umfassen, wenn die Aufhängungselemente (13c, 13d) von der Struktur (1) abgekoppelt bzw. an diese angekoppelt werden.

7. Raupenfahrzeug (10) nach Anspruch 1 oder 6, wobei die mindestens eine Antriebseinheit (11, 11a, 11b, 11c) eine gerade Anzahl von Aufhängungselementen (13, 13b, 13c, 13d) umfasst.

8. Raupenfahrzeug (10) nach Anspruch 1 oder einem der vorstehenden Ansprüche 6-7, wobei die Aufhängungselemente (13c, 13d), die zum Herstellen einer elektrischen Verbindung mit der Struktur (1) ausgebildet sind, entlang der mindestens einen ersten Antriebseinheit (11, 11a, 11b, 11c) derart verteilt sind, dass, wenn sich das Fahrzeug (10) entlang der Struktur (1) bewegt, ein Aufhängungselement (13c, 13d) für die elektrische Verbindung eines jeweiligen Pols/einer jeweiligen Phase/einer jeweiligen Leitung in die Struktur (1) eingekoppelt wird, bevor das ansonsten letzte mit dem jeweiligen Pol/der jeweiligen Phase/der jeweiligen Leitung verbundene Aufhängungselement (13c, 13d) von der Struktur (1).

9. Raupenfahrzeug (10) nach Anspruch 1 oder einem der vorstehenden Ansprüche 6 bis 8, wobei die mindestens eine erste Antriebseinheit (11, 11a, 11b, 11c) des Raupenfahrzeugs (10) so ausgebildet ist, dass sie eine geschlossene Bahn der Aufhängungselemente (13, 13b) ermöglicht;
wobei die erste und die zweite Umfangsbahn (12a, 12b) so geformt sind, dass die Aufhängungselemente (13, 13b) nur beim Passieren eines gekrümmten Abschnitts der Bahnen von der Struktur (1) entkoppelt bzw. mit dieser gekoppelt werden;
wobei die Aufhängungselemente (13, 13b) mittels einer ersten Umlenkrolle fest an der ersten Umfangsschiene (12a) befestigt bzw. mit dieser gekoppelt sind, wobei die Aufhängungselemente (13, 13b) jeweils mittels einer zweiten Umlenkrolle innerhalb der zweiten Umfangsschiene (12b) geführt werden, wobei die erste und die zweite Umlenkrolle vorzugsweise an einem Hebelarm des jeweiligen Aufhängungselements angeordnet sind, wobei das jeweilige Aufhängungselement vorzugsweise eine L-Form aufweist;
und/oder wobei jedes Aufhängungselement eine erste Riemenscheibe und eine zweite Riemenscheibe aufweist, die in Längsrichtung in einem Abstand zur ersten Riemenscheibe an einem Hebelarm des jeweiligen Aufhängungselements angeordnet ist, wobei das Aufhängungselement über die erste und die zweite Riemenscheibe mit der ersten und der zweiten Bahn gekoppelt ist;
und/oder wobei jedes Aufhängungselement einen Hebelarm aufweist, der die von der zweiten Schiene geführte Riemenscheibe aufnimmt/trägt, wobei die Riemenscheibe an einem freien Ende des Hebelarms angeordnet ist und wobei der Hebelarm in einem geraden Abschnitt der Schiene zumindest annähernd in Fahrrichtung zeigt;
und/oder wobei die Aufhängungselemente (13, 13b) mittels Längsverbindungselementen miteinander verbunden sind, insbesondere durch Längsverbindungselemente, die an der Achse der ersten Riemenscheibe des jeweiligen Aufhängungselements verbunden sind, wodurch eine geschlossene Schleife aus miteinander verbundenen Aufhängungselementen (13, 13b) gebildet wird, die in dem vordefinierten Raster voneinander beabstandet sind; wobei die erste Umfangsbahn (12a) eine Kette aufweist oder durch eine Kette gebildet wird, die eine geschlossene Schleife aus miteinander verbundenen Kettenelementen bildet, die die Aufhängungselemente (13, 13b) verbinden, wobei das Fahrzeug (10) eine Vielzahl von Gegenrädern aufweist, die insbesondere so konfiguriert und angeordnet sind, dass sie frontal mit der Deckenkonstruktion (1) zusammenwirken, wobei die Vielzahl von Gegenrädern vorzugsweise mit der ersten Umfangsschiene (12a) gekoppelt ist, insbesondere mit Kettenelementen der ersten Umfangsschiene;
wobei das Fahrzeug (10) eine weitere erste Antriebseinheit aufweist, die weitere Umfangsschienen (12a, 12b) aufnimmt, wobei eine Vielzahl weiterer Aufhängungselemente (13b) an den weiteren Umfangsschienen in vordefinierten Längspositionen entsprechend einem/dem vordefinierten Raster befestigt und so ausgebildet ist, dass sie das Fahrzeug anhängen (10) und zum Koppeln des Fahrzeugs (10) mit der Struktur, insbesondere derart, dass das Fahrzeug (10) in Bezug auf entgegengesetzte Richtungen an der Struktur gesichert ist, wobei das Fahrzeug (10) weitere Aufhängungselemente (13b) aufweist, die an weiteren Umfangsschienen (12a, 12b) befestigt sind, wobei die Aufhängungselemente (13) und die weiteren Aufhängungselemente (13b), die vorübergehend mit der Struktur (1) in Eingriff stehen, das Fahrzeug (10) an der Struktur (1) in Bezug auf die Fahr-/Bewegungsrichtung und entgegen dieser sichern/blockieren,
und/oder wobei das Fahrzeug (10) eine weitere Antriebseinheit aufweist, die dieselbe Konfiguration wie die erste Antriebseinheit aufweist, jedoch mit einer spiegelbildlich umgekehrten Anordnung der weiteren Aufhängungselemente (13b) und weiteren Umfangsbahnen (12, 12a, 12b), wobei die weiteren Aufhängungselemente (13b) in einer Richtung entgegengesetzt zur Führungsrichtung der Aufhängungselemente (13) der ersten Antriebseinheit geführt/angetrieben werden, insbesondere derart, dass sowohl die jeweiligen Aufhängungselemente (13) als auch die weiteren Aufhängungselemente (13b) gleichzeitig an die Struktur an- bzw. von dieser abgekoppelt werden;
wobei die mindestens eine erste Antriebseinheit so ausgelegt ist, dass sie das jeweilige Aufhängungselement in unbelastetem Zustand aus der Struktur (1) anhebt, insbesondere derart, dass die mindestens eine erste Antriebseinheit sowohl für die An- /Abkupplungskinematik einer Teilmenge von momentan unbelasteten Aufhängungselementen (13, 13b) als auch für die Aufhängung des Fahrzeugs (10) durch eine Teilmenge von momentan belasteten Aufhängungselementen (13, 13b) gleichzeitig; und/oder wobei die mindestens eine erste Antriebseinheit eine im Wesentlichen ebene Konfiguration aufweist;
und/oder wobei das Fahrzeug (10) mindestens zwei parallel zueinander angeordnete erste Antriebseinheiten aufweist;
und/oder wobei die Umfangsbahnen (12a, 12b) jeweils in einer Ebene geführt/angetrieben werden, die sich zweidimensional erstreckt;
und/oder wobei die mindestens eine erste Antriebseinheit mittels mindestens drei Aufhängungselementen (13, 13b) gekoppelt ist;
und/oder wobei das jeweilige Aufhängungselement eine L-Form aufweist, die zwei Arme bereitstellt, welche die relative Anordnung des Rades und der ersten und zweiten Riemenscheiben des jeweiligen Aufhängungselements definieren.

10. Raupenfahrzeug (10) nach Anspruch 1 oder einem der vorstehenden Ansprüche 6 bis 9, wobei das Fahrzeug (10) vier erste Antriebseinheiten (11, 11a, 11b, 11c) umfasst, die alle parallel angeordnet sind, wobei zwei der ersten Antriebseinheiten (11, 11a, 11b, 11c) mit spiegelbildlicher Anordnung der weiteren Aufhängungselemente (13b) und weiteren Umfangsspuren (12, 12a, 12b) aufweist, wobei die weiteren Aufhängungselemente (13b) in einer Richtung entgegengesetzt zur Führungsrichtung der Aufhängungselemente (13) der ersten Antriebseinheit geführt/angetrieben werden, insbesondere derart, dass sowohl die jeweiligen Aufhängungselemente (13) als auch die weiteren Aufhängungselemente (13b) gleichzeitig an die Struktur an- bzw. von dieser abgekoppelt werden, wobei die ersten Antriebseinheiten (11, 11a, 11b, 11c) paarweise angeordnet sind, wobei die Paare horizontal voneinander beabstandet sind, wobei mindestens eine erste Antriebseinheit (11, 11a, 11b, 11c) jedes Paares Aufhängungselemente (13c, 13d) zum Herstellen einer elektrischen Verbindung mit der Struktur (1) umfasst.

11. Raupenfahrzeug (10) nach einem der vorstehenden Ansprüche, wobei jedes Aufhängungselement (13, 13b, 13c, 13d) des Fahrzeugs (10) zum Herstellen einer elektrischen Verbindung mit der Struktur (1) ausgebildet ist.

12. Raupenfahrzeug (10) nach einem der vorstehenden Ansprüche, wobei das Fahrzeug (10) aufweist:
- mindestens eine zweite Antriebseinheit (21), die so ausgelegt ist, dass sie die Fortbewegung des Deckenfahrzeugs (10) in mindestens zwei räumlichen Richtungen ermöglicht, nämlich einer ersten räumlichen Richtung, die durch die Struktur (1) vorgegeben ist, und einer zweiten räumlichen Richtung, die durch die Führungs-/Antriebsbewegung der mindestens einen ersten Antriebseinheit (11), wobei die zweite Raumrichtung orthogonal zur ersten Raumrichtung ist, wobei die zweite Antriebseinheit (21) für die Fortbewegung des Fahrzeugs (10) in der ersten Raumrichtung ausgelegt ist, wodurch eine zumindest zweidimensionale Fortbewegungsfähigkeit des Fahrzeugs (10), wobei das jeweilige Aufhängungselement (13) an mindestens ein Rad (13.3) aufweist, das so angeordnet und ausgebildet ist, dass es entlang der Struktur (1) geführt wird, insbesondere auf einer Radlauffläche 1.2 eines jeweiligen/entsprechenden Profils der Struktur,
- mindestens zwei einzeln steuerbare Motoren (11.5, 27), wobei mindestens eine erste Antriebseinheit (11) und mindestens eine zweite Antriebseinheit (21) mit mindestens einem Motor (11.5, 27) verbunden ist und wobei die Motoren (11.5, 27) für die erste Antriebseinheit(n) (11) und die zweiten Antriebseinheiten (21) unterschiedlich sind, was eine aktive zweidimensionale Fahrfähigkeit des Fahrzeugs ermöglicht, wobei die Motoren (11.5, 27) elektrisch mit dem Energiespeicher und/oder den Stromschienen (10.5) verbunden sind.

13. Raupenfahrzeug (10) nach einem der vorstehenden Ansprüche, wobei das Fahrzeug (10) zwei Stromschienen (10.5) aufweist, wobei die Stromschienen (10.5) auf gegenüberliegenden Seiten einer oder mehrerer erster Antriebseinheiten (11, 11a, 11b, 11c) angeordnet sind, wobei der zweite elektrische Kontakt (13.7), insbesondere ein Schleifer, eines Aufhängungselements (13c) auf einer Seite und der zweite elektrische Kontakt (13.7), insbesondere ein Schleifer, eines zweiten Aufhängungselements (13d) auf einer anderen Seite angeordnet ist;
oder wobei das Fahrzeug (10) zwei Stromschienen (10.5) aufweist, wobei die Stromschienen (10.5) auf einer Seite der mindestens einen ersten Antriebseinheit (11, 11a, 11b, 11c) vertikal beabstandet angeordnet sind, wobei der zweite elektrische Kontakt (13.7), insbesondere ein Schleifer, eines Aufhängungselements (13c) auf einer Seite in einer entsprechenden ersten Höhe und der zweite elektrische Kontakt (13.7), insbesondere ein Schleifer, eines zweiten Aufhängungselements (13d) auf derselben Seite in einer entsprechenden zweiten Höhe angeordnet ist.

14. Raupenfahrzeug (10) nach einem der Ansprüche 1 bis 12, wobei das Fahrzeug (10) vier Stromschienen (10.5) aufweist, wobei jeweils zwei Stromschienen (10.5) auf gegenüberliegenden Seiten einer oder mehrerer erster Antriebseinheiten (11, 11a, 11b, 11c) angeordnet sind, wobei die zweiten elektrischen Kontakte (13.7) von zwei Aufhängungselementen (13c-1, 13c-2) auf einer Seite und die zweiten elektrischen Kontakte (13.7) von zwei zweiten Aufhängungselementen (13d-1, 13d-2) auf einer anderen Seite angeordnet sind, und wobei die beiden Stromschienen (10.5), die auf einer Seite der mindestens einen ersten Antriebseinheit (11, 11a, 11b, 11c) jeweils vertikal voneinander beabstandet sind, wobei die zweiten elektrischen Kontakte (13.7) der Aufhängungselemente (13c-1, 13d-1) auf einer Seite in einer entsprechenden ersten Höhe und die zweiten elektrischen Kontakte (13.7) der zweiten Aufhängungselemente (13c-2, 13d-2) jeweils auf derselben Seite in einer entsprechenden zweiten Höhe angeordnet sind.

15. Verfahren zum Anhängen eines Raupenfahrzeugs (10) an einer Konstruktion (1) zum hängenden Fahren entlang der Konstruktion, insbesondere eines Raupenfahrzeugs (10) gemäß einem der Ansprüche 1 bis 14, wobei das Fahrzeug (10) mittels einer Vielzahl von Aufhängungselementen (13, 13b, 13c, 13d) aufgehängt wird, die das Fahrzeug (10) mit der Struktur (1) verbinden, wobei eine Umfangsführungs-/Antriebsbewegung durch eine erste und eine zweite Umfangsbahn (12a, 12b) mit unterschiedlicher Umfangsform/-kontur definiert ist, wobei die Aufhängungselemente (13, 13b, 13c, 13d) an der ersten Umfangsbahn an vordefinierten ersten Längspositionen befestigt sind, die einem durch die Struktur definierten Raster entsprechen, wobei das Fahrzeug (10) so angehängt ist, dass es sich entlang der Struktur (1) bewegen kann, indem ein Teil der Vielzahl von Aufhängungselementen (13, 13b, 13c, 13d) von der Struktur (1) entkoppelt bzw. in diese eingekoppelt werden, wenn die Aufhängungselemente (13, 13b, 13c, 13d) durch die Umfangsbewegung entlang der Umfangsschienen (12a, 12b) geführt werden, wobei die Umfangsbewegung durch die Aufhängungselemente (13, 13b, 13c, 13d) durch kurzzeitiges Eingreifen in die Struktur (1) übertragen bzw. weitergeleitet wird, wobei die Umfangsbewegung durch erste Antriebseinheiten (11a, 11b) bereitgestellt wird und wobei das Fahrzeug (10) elektrisch mit einem in die Struktur (1) integrierten elektrischen Bus (1.3) verbunden ist, wobei vorzugsweise sichergestellt ist, dass mindestens zwei Aufhängungselemente (13c, 13d) jederzeit mit mindestens einem jeweiligen Pol/einer jeweiligen Phase/einer jeweiligen Leitung des elektrischen Busses (1.3) verbunden sind, vorzugsweise mit jedem Pol/jeder Phase/jeder Leitung des elektrischen Busses (1.3).

## Revendications

1. Véhicule à chenilles (10) conçu pour se déplacer en suspension, dans lequel le véhicule (10) présente :
- une pluralité d'éléments de suspension (13, 13b, 13c, 13d) conçus pour suspendre le véhicule (10) et pour accoupler le véhicule (10) à une structure (1), dans lequel au moins deux des éléments de suspension (13c, 13d) comprennent chacun au moins deux contacts électriques (13.4, 13.7) reliés électriquement, conçus pour établir une connexion électrique entre la structure (1) et le véhicule (10),
dans lequel le véhicule (10) est configuré pour se déplacer le long de la structure (1) en désaccouplant un sous-ensemble de la pluralité d'éléments de suspension (13, 13b, 13c, 13d) de leur accouplement respectif à la structure (1),
dans lequel le premier contact électrique (13.4) d'un premier élément de suspension (13c) destiné à établir une connexion électrique est connecté électriquement à un premier pôle/phase/ligne d'un bus électrique (1.3) dans la structure (1) lorsque le véhicule (10) est couplé à la structure (1) via le premier élément de suspension (13c) et le premier contact électrique (13.4) d'un deuxième élément de suspension (13d) destiné à établir une connexion électrique est relié électriquement à un deuxième pôle/phase/ligne du bus électrique (1.3) dans la structure (1) lorsque le véhicule (10) est accouplé à la structure (1) via le deuxième élément de suspension (13d), et
dans lequel les seconds contacts électriques (13.7) des éléments de suspension (13c, 13d) sont chacun connectés à un pôle/une phase/une ligne respective d'un bus interne (10.5) du véhicule (10) au moins lorsque le véhicule (10) est couplé à la structure (1) via les éléments de suspension (13c, 13d) pour établir une connexion électrique,
- au moins une première unité d'entraînement (11, 11a, 11b, 11c) configurée pour un mouvement circonférentiel et comportant une première piste circonférentielle (12a) et une deuxième piste circonférentielle (12b) ayant une forme/un contour circonférentiel différent de celui de la première piste circonférentielle, dans laquelle les éléments de suspension (13, 13b, 13c, 13d) sont fixés à la première piste circonférentielle (12a) à des premières positions longitudinales prédéfinies correspondant à une trame prédéfinie (1a), les éléments de suspension (13, 13b, 13c, 13d) étant guidés le long des deux pistes circonférentielles (12, 12a, 12b) par le mouvement circonférentiel,
dans lequel les première et deuxième pistes circonférentielles (12a, 12b) sont formées de telle manière que les éléments de suspension (13, 13b) sont désaccouplés de la structure (1) ou accouplés à celle-ci lorsqu'ils passent par une section courbe (12r) des pistes.

2. Véhicule à chenilles (10) selon la revendication 1, dans lequel un point d'appui (P13) situé à une extrémité libre de l'élément de suspension (13) est guidé en fonction de la position/du contour relatif et de la distance des pistes correspondantes (12a, 12b).

3. Véhicule à chenilles (10) selon la revendication 1, dans lequel les premiers contacts électriques (13.4) des éléments de suspension (13c, 13d) configurés pour établir une connexion électrique avec la structure (1) comportent un premier curseur (13.4) destiné à se connecter par glissement aux rails d'alimentation (1.3) d'un pôle/d'une phase correspondant(e) intégré(e) dans la structure (1) et dans lequel les seconds contacts électriques (13.7) des éléments de suspension (13c, 13d) comportent un deuxième curseur (13.7) destiné à un contact coulissant avec des rails conducteurs (10.5) du pôle/de la phase correspondant(e), dans lequel chaque premier curseur (13.4) est relié électriquement à son deuxième curseur (13.7) correspondant de l'élément de suspension respectif (13c, 13d).

4. Véhicule à chenilles (10) selon l'une quelconque des revendications précédentes, dans lequel le véhicule (10) comprend des composants électroniques connectés au bus interne (10.5) pour alimenter le véhicule (10) en énergie et/ou dans lequel le véhicule (10) comprend un dispositif de stockage d'énergie et/ou dans lequel le véhicule (10) comprend des moyens de connexion pour se connecter à un équipement, dans lequel l'équipement peut être alimenté en énergie via les moyens de connexion.

5. Véhicule à chenilles (10) selon l'une quelconque des revendications précédentes, dans lequel, lorsque le véhicule (10) est en mouvement, lorsque les éléments de suspension (13c, 13d) destinés à établir une connexion électrique sont couplés à la structure (1), les seconds contacts électriques (13.7) sont connectés au rail conducteur (10.5) de telle sorte que le premier contact électrique (13.4) présente un potentiel défini avant que le premier contact électrique (13.4) ne soit à proximité ou connecté au bus électrique (1.3), et lorsque les éléments de suspension (13c, 13d) sont désaccouplés de la structure (1), les premiers contacts électriques (13.4) sont déconnectés du bus électrique (1.3) avant que les seconds contacts électriques (13.7) ne soient déconnectés du rail conducteur (10.5),
ou dans lequel, lorsque le véhicule (10) est en mouvement, lorsque les éléments de suspension (13c, 13d) destinés à établir une connexion électrique sont accouplés à la structure (1), les premiers contacts électriques (13.4) sont connectés au bus électrique (1.3) avant que les seconds contacts électriques (13.7) ne soient à proximité ou connectés au rail conducteur (10.5), et lorsque les éléments de suspension (13c, 13d) sont désaccouplés de la structure (1), les seconds contacts électriques (13.7) sont déconnectés du rail conducteur (10.5) avant que les premiers contacts électriques (13.4) ne soient déconnectés du bus électrique (1.3).

6. Véhicule à chenilles (10) selon la revendication 1, dans lequel le véhicule (10) présente en outre :
- au moins deux rails conducteurs (10.5) placés en parallèle au moins par rapport à des sections des chenilles circonférentielles (12a, 12b), dans lequel les au moins deux éléments de suspension (13c, 13d) comprennent des moyens pour se déconnecter des rails conducteurs (10.5) ou s'y connecter lorsque les éléments de suspension (13c, 13d) sont désaccouplés de la structure (1) ou accouplés à celle-ci.

7. Véhicule à chenilles (10) selon la revendication 1 ou 6, dans lequel la au moins une unité d'entraînement (11, 11a, 11b, 11c) comprend un nombre pair d'éléments de suspension (13, 13b, 13c, 13d).

8. Véhicule à chenilles (10) selon la revendication 1 ou l'une quelconque des revendications 6 à 7 précédentes, dans lequel les éléments de suspension (13c, 13d) configurés pour établir une connexion électrique avec la structure (1) sont répartis le long de la au moins une première unité d'entraînement (11, 11a, 11b, 11c) de telle sorte que, lorsque le véhicule (10) se déplace le long de la structure (1), un élément de suspension (13c, 13d) destiné à la connexion électrique d'un pôle/d'une phase/d'une ligne respectif(ve) soit accouplé à la structure (1) avant que l'élément de suspension (13c, 13d) qui serait autrement le dernier à être connecté au pôle/à la phase/à la ligne respectif(ve) ne soit désaccouplé de la structure (1).

9. Véhicule à chenilles (10) selon la revendication 1 ou l'une quelconque des revendications 6 à 8 précédentes, dans lequel la au moins une première unité d'entraînement (11, 11a, 11b, 11c) du véhicule à chenilles (10) est configurée pour permettre une trajectoire en boucle fermée des éléments de suspension (13, 13b) ;
dans lequel les première et deuxième chenilles circonférentielles (12a, 12b) sont formées de telle manière que les éléments de suspension (13, 13b) ne sont désaccouplés de la structure (1) ou accouplés à celle-ci que lors du passage d'une section courbe des chenilles ;
dans lequel les éléments de suspension (13, 13b) sont fixés/accouplés de manière rigide au moyen d'une première poulie à la première voie circonférentielle (12a), dans lequel les éléments de suspension (13, 13b) sont guidés à l'intérieur de la deuxième voie circonférentielle (12b) au moyen d'une deuxième poulie respectivement, dans lequel la première et la deuxième poulie sont de préférence disposées sur un bras de levier de l'élément de suspension respectif, dans lequel l'élément de suspension respectif a de préférence une forme en L ;
et/ou dans lequel chaque élément de suspension comporte une première poulie et une deuxième poulie disposées à distance longitudinale l'une de l'autre par rapport à la première poulie au niveau d'un bras de levier de l'élément de suspension correspondant, l'élément de suspension étant couplé aux première et deuxième pistes via les première et deuxième poulies ;
et/ou dans lequel chaque élément de suspension comporte un bras de levier recevant/supportant la poulie guidée par la deuxième voie, la poulie étant disposée à une extrémité libre du bras de levier de l' , et dans lequel, dans une section linéaire de la voie, le bras de levier est orienté, au moins approximativement, dans la direction d'entraînement/de déplacement ;
et/ou dans lequel les éléments de suspension (13, 13b) sont reliés les uns aux autres au moyen d'éléments de liaison longitudinaux, en particulier par des éléments de liaison longitudinaux reliés à l'axe de la première poulie de l'élément de suspension respectif, formant ainsi une boucle fermée d'éléments de suspension (13, 13b) interconnectés et espacés les uns des autres selon la trame prédéfinie ;
dans lequel la première piste circonférentielle (12a) présente une chaîne ou est constituée/définie par une chaîne formant une boucle fermée d'éléments de chaîne interconnectés reliant les éléments de suspension (13, 13b), dans lequel le véhicule (10) comporte une pluralité de roues d'appui, en particulier configurées et agencées pour interagir frontalement avec la structure de plafond (1), dans lequel la pluralité de roues d'appui est de préférence couplée à la première piste circonférentielle (12a), en particulier couplée à des éléments de chaîne de la première piste circonférentielle ;
dans lequel le véhicule (10) comporte une autre première unité d'entraînement logeant d'autres pistes circonférentielles (12a, 12b), dans lequel une pluralité d'autres éléments de suspension (13b) sont fixés aux autres pistes circonférentielles dans des positions longitudinales prédéfinies correspondant à une/la trame prédéfinie et sont configurés pour suspendre le véhicule (10) et pour coupler le véhicule (10) à la structure, en particulier de telle sorte que le véhicule (10) soit fixé par rapport à des directions opposées au niveau de la structure, dans lequel le véhicule (10) comporte d'autres éléments de suspension (13b) qui sont fixés à d'autres pistes circonférentielles (12a, 12b), les éléments de suspension (13) et les autres éléments de suspension (13b) s'engageant momentanément dans la structure (1) immobilisant le véhicule (10) sur la structure (1) par rapport au sens de marche et dans le sens opposé à celui-ci,
et/ou dans lequel le véhicule (10) comporte une unité d'entraînement supplémentaire qui présente la même configuration que la première unité d'entraînement, mais avec une disposition inversée des éléments de suspension supplémentaires (13b) et des chenilles circonférentielles supplémentaires (12, 12a, 12b), les éléments de suspension supplémentaires (13b) étant guidés/entraînés dans une direction opposée à la direction de guidage des éléments de suspension (13) de la première unité d'entraînement, en particulier de telle sorte que les éléments de suspension respectifs (13) et les éléments de suspension supplémentaires (13b) soient simultanément désaccouplés de la structure ;
dans lequel la au moins une première unité d'entraînement est configurée pour soulever l'élément de suspension respectif hors de la structure (1) à l'état non chargé, en particulier de telle sorte que la au moins une première unité d'entraînement assure à la fois la cinématique de désaccouplement/accouplement d'un sous-ensemble d'éléments de suspension momentanément non chargés (13, 13b) et la suspension du véhicule (10) par un sous-ensemble d'éléments de suspension momentanément chargés (13, 13b) ;
et/ou dans laquelle la au moins une première unité d'entraînement présente une configuration sensiblement plane ;
et/ou dans lequel le véhicule (10) présente au moins deux premières unités d'entraînement disposées parallèlement l'une à l'autre ;
et/ou dans lequel les chenilles circonférentielles (12a, 12b) sont respectivement guidées/entraînées dans un plan s'étendant de manière bidimensionnelle ;
et/ou dans lequel la au moins une première unité d'entraînement est couplée au moyen d'au moins trois éléments de suspension (13, 13b) ;
et/ou dans lequel l'élément de suspension respectif présente une forme en L qui comporte deux bras définissant la disposition relative d'une roue et des première et deuxième poulies de l'élément de suspension respectif.

10. Véhicule à chenilles (10) selon la revendication 1 ou l'une quelconque des revendications 6 à 9 précédentes, dans lequel le véhicule (10) comprend quatre premières unités d'entraînement (11, 11a, 11b, 11c), qui sont toutes disposées en parallèle, deux des premières unités d'entraînement (11, 11a, 11b, 11c) présentant une disposition inversée par rapport aux autres éléments de suspension (13b) et aux autres chenilles circonférentielles (12, 12a, 12b), les éléments de suspension supplémentaires (13b) étant guidés/entraînés dans une direction opposée à la direction de guidage des éléments de suspension (13) de la première unité d'entraînement, en particulier de telle sorte que les éléments de suspension respectifs (13) et les éléments de suspension supplémentaires (13b) soient simultanément désaccouplés de la structure, les premières unités d'entraînement (11, 11a, 11b, 11c) sont disposées par paires, les paires étant espacées horizontalement, au moins une première unité d'entraînement (11, 11a, 11b, 11c) de chaque paire comprenant des éléments de suspension (13c, 13d) destinés à établir une connexion électrique avec la structure (1).

11. Véhicule à chenilles (10) selon l'une quelconque des revendications précédentes, dans lequel chaque élément de suspension (13, 13b, 13c, 13d) du véhicule (10) est configuré pour établir une connexion électrique avec la structure (1).

12. Véhicule de type chenillé (10) selon l'une quelconque des revendications précédentes, dans lequel le véhicule (10) présente :
- au moins une deuxième unité d'entraînement (21) configurée pour permettre la locomotion du véhicule de plafond (10) dans au moins deux directions spatiales, à savoir une première direction spatiale prédéfinie par la structure (1) et une deuxième direction spatiale définie par le mouvement de guidage/entraînement de la au moins une première unité d'entraînement (11), dans lequel la deuxième direction spatiale est orthogonale à la première direction spatiale, dans lequel la deuxième unité d'entraînement (21) est configurée pour la locomotion du véhicule (10) dans la première direction spatiale, assurant ainsi une capacité de locomotion au moins bidimensionnelle du véhicule (10), dans lequel l'élément de suspension respectif (13) présente au niveau d' u moins une roue (13.3) qui est agencée et configurée pour être guidée le long de la structure (1), en particulier sur une bande de roulement 1.2 d'un profil respectif/correspondant de la structure,
- au moins deux moteurs (11.5, 27) commandables individuellement, dans lesquels au moins une première unité d'entraînement (11) et au moins une deuxième unité d'entraînement (21) sont reliées à au moins un moteur (11.5, 27), et dans lesquels les moteurs (11.5, 27) pour la ou les premières unités d'entraînement(s) (11) et les deuxièmes unités d'entraînement (21) sont différents, assurant une capacité de déplacement bidimensionnelle active du véhicule, les moteurs (11.5, 27) étant reliés électriquement au dispositif de stockage d'énergie et/ou aux rails conducteurs (10.5).

13. Véhicule de type chenillé (10) selon l'une quelconque des revendications précédentes, dans lequel le véhicule (10) comporte deux rails conducteurs (10.5), dans lequel les rails conducteurs (10.5) sont placés sur les côtés opposés d'une ou plusieurs premières unités d'entraînement (11, 11a, 11b, 11c), dans lequel le deuxième contact électrique (13.7), en particulier un curseur, d'un élément de suspension (13c) est placé d'un côté et le deuxième contact électrique (13.7), en particulier un curseur, d'un deuxième élément de suspension (13d) est placé de l'autre côté ;
ou dans lequel le véhicule (10) comporte deux rails conducteurs (10.5), les rails conducteurs (10.5) étant disposés d'un côté de la au moins une première unité d'entraînement (11, 11a, 11b, 11c) espacées verticalement, dans lequel le deuxième contact électrique (13.7), en particulier un curseur, d'un élément de suspension (13c) est placé d'un côté à une première hauteur correspondante et le deuxième contact électrique (13.7), en particulier un curseur, d'un deuxième élément de suspension (13d) est placé du même côté à une deuxième hauteur correspondante.

14. Véhicule à chenilles (10) selon l'une quelconque des revendications 1 à 12, dans lequel le véhicule (10) comporte quatre rails conducteurs (10.5), dans lequel deux rails conducteurs (10.5) sont chacun placés sur des côtés opposés d'une ou plusieurs premières unités d'entraînement (11, 11a, 11b, 11c), dans lequel les seconds contacts électriques (13.7) de deux éléments de suspension (13c-1, 13c-2) sont placés d'un côté et les seconds contacts électriques (13.7) de deux seconds éléments de suspension (13d-1, 13d-2) sont placés de l'autre côté, et dans lequel les deux rails conducteurs (10.5) qui sont placés d'un côté de la au moins une première unité d'entraînement (11, 11a, 11b, 11c) sont respectivement espacés verticalement, les seconds contacts électriques (13.7) des éléments de suspension (13c-1, 13d-1) étant placés d'un côté à une première hauteur correspondante et les seconds contacts électriques (13.7) des seconds éléments de suspension (13c-2, 13d-2) étant chacun placés du même côté à une seconde hauteur correspondante.

15. Procédé de suspension d'un véhicule à chenilles (10) à une structure (1) pour se déplacer de manière suspendue le long de la structure, en particulier d'un véhicule à chenilles (10) selon l'une des revendications 1 à 14 de I , dans lequel le véhicule (10) est suspendu au moyen d'une pluralité d'éléments de suspension (13, 13b, 13c, 13d) couplant le véhicule (10) à la structure (1), dans lequel un mouvement de guidage/entraînement circonférentiel est défini par des première et deuxième pistes circonférentielles (12a, 12b) ayant une forme/un contour circonférentiel différent, dans lequel les éléments de suspension (13, 13b, 13c, 13d) sont fixés à la première piste circonférentielle à des premières positions longitudinales prédéfinies correspondant à une trame définie par la structure, dans lequel le véhicule (10) est suspendu de telle sorte qu'il peut se déplacer le long de la structure (1) en désaccouplant un sous-ensemble de la pluralité d'éléments de suspension (13, 13b, 13c, 13d) de la structure (1) ou en les accouplant à celle-ci lorsque les éléments de suspension (13, 13b, 13c, 13d) sont guidés le long des pistes circonférentielles (12a, 12b) par le mouvement circonférentiel, dans lequel le mouvement circonférentiel est transmis/transféré par les éléments de suspension (13, 13b, 13c, 13d) s'engageant momentanément avec la structure (1), le mouvement circonférentiel étant fourni par des premières unités d'entraînement (11a, 11b), et le véhicule (10) étant connecté électriquement à un bus électrique (1.3) intégré dans la structure (1), de préférence en veillant à ce qu'au moins deux éléments de suspension (13c, 13d) soient connectés à tout moment à au moins un pôle/une phase/une ligne respective du bus électrique (1.3), de préférence à chaque pôle/phase/ligne du bus électrique (1.3).
